(19) Europäisches Patentamt
European Patent Office
Office européen des brevets

(11) **EP 2 649 515 B1**

(12) **EUROPÄISCHE PATENTSCHRIFT**

(45) Veröffentlichungstag und Bekanntmachung des Hinweises auf die Patenterteilung:
**30.03.2016 Patentblatt 2016/13**

(21) Anmeldenummer: **11787665.6**

(22) Anmeldetag: **16.11.2011**

(51) Int Cl.:
***G06F 7/72*** *(2006.01)*

(86) Internationale Anmeldenummer:
**PCT/EP2011/070265**

(87) Internationale Veröffentlichungsnummer:
**WO 2012/066043 (24.05.2012 Gazette 2012/21)**

(54) **UNIFIZIERTER MULTIPLIZIERER FÜR DIE GALOIS-KÖRPER GF(2n) UND GF(p), SOWIE KRYPTOGRAPHIE-VERFAHREN UND KRYPTOGRAPHIE-VORRICHTUNG**

UNIFIED MULTIPLIER FOR THE FINITE FIELDS GF(2N) AND GF(P), CRYPTOGRAPHIC METHOD, AND CRYPTOGRAPHIC DEVICE

MULTIPLICATEUR UNIFIÉE DE CORPS FINI GF(2N) ET GF(P), PROCÉDÉ CRYPTOGRAPHIQUE, ET DISPOSITIF CRYPTOGRAPHIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.11.2010 DE 102010043993**

(43) Veröffentlichungstag der Anmeldung:
**16.10.2013 Patentblatt 2013/42**

(73) Patentinhaber: **IHP GmbH-Innovations for High Performance**
**Microelectronics / Leibniz-Institut für innovative Mikroelektronik**
**15236 Frankfurt / Oder (DE)**

(72) Erfinder:
• **DYKA, Zoya**
**15230 Frankfurt (Oder) (DE)**
• **LANGENDÖRFER, Peter**
**15234 Frankfurt (Oder) (DE)**

(74) Vertreter: **Eckey, Ludger**
**Eisenführ Speiser**
**Patentanwälte Rechtsanwälte PartGmbB**
**Anna-Louisa-Karsch-Straße 2**
**DE-10178 Berlin (DE)**

(56) Entgegenhaltungen:
**US-A1- 2009 006 517**

• SAVAS E ET AL: "A SCALABLE AND UNIFIED MULTIPLIER ARCHITECTURE FOR FINITE FIELDS GF(P) AND GF(2M)", CRYPTOGRAPHIC HARDWARE AND EMBEDDED SYSTEMS. 2ND INTERNATIONAL WORKSHOP, CHES 2000, WORCHESTER, MA, AUG. 17 - 18, 2000 PROCEEDINGS; [LECTURE NOTES IN COMPUTER SCIENCE], BERLIN : SPRINGER, DE, Bd. VOL. 1965, 17. August 2000 (2000-08-17), Seiten 277-292, XP001049138, ISBN: 978-3-540-41455-1
• GANG ZHOU ET AL: "Complexity Analysis and Efficient Implementations of Bit Parallel Finite Field Multipliers Based on Karatsuba-Ofman Algorithm on FPGAs", IEEE TRANSACTIONS ON VERY LARGE SCALE INTEGRATION (VLSI) SYSTEMS, IEEE SERVICE CENTER, PISCATAWAY, NJ, USA, Bd. 18, Nr. 7, 1. Juli 2010 (2010-07-01), Seiten 1057-1066, XP011295075, ISSN: 1063-8210, DOI: 10.1109/TVLSI.2009.2020088
• Johann Großschädl ET AL: "Low-Power Design of a Functional Unit for Arithmetic in Finite Fields GF(p) and GF(2m)", WISA 2003, LNCS 2908, 1. Januar 2004 (2004-01-01), Seiten 227-243, XP55028534, Berlin Gefunden im Internet: URL:http://www.springerlink.com/content/31 euevhpx98rvbc3/fulltext.pdf [gefunden am 2012-05-31]

**Beschreibung**

Die Erfindung betrifft eine Vorrichtung und ein Verfahren zur wahlweisen Ermittlung des Produktes C zweier in Form endlicher Bitfolgen $A = a_{n-1}a_{n-2}...a_1a_0$ und $B = b_{n-1}b_{n-2}...b_1b_0$ vorliegender Faktoren als Produkt im Galois-Körper GF(p) oder als Produkt im Galois-Körper GF($2^n$). Die Erfindung betrifft weiterhin kryptographische Vorrichtungen und Verfahren.

1. Technischer Hintergrund

*1.1 Elliptische Kurvenkryptographie*

Bei der Kryptographie mit öffentlichen Schlüsseln werden so genannte asymmetrische Verschlüsselungsverfahren verwendet. Hierbei wird ein öffentlicher Schlüssel zur Verschlüsselung von Daten verwendet, der hierfür seinem Namen entsprechend dritten Personen bekannt gemacht wird. Eine Entschlüsselung der mit dem öffentlichen Schlüssel verschlüsselten Daten kann nur mit einem privaten Schlüssel erfolgen, über den nur der Empfänger der Nachricht verfügt.
Die Elliptische Kurvenkryptographie (engl. Elliptic Curve Crypography, ECC) hat gegenüber anderen bekannten asymmetrischen Kryptographie-Verfahren wie RSA den Vorteil, dass kürzere Schlüssel verwendet werden können, ohne die Sicherheit der Verschlüsselung zu reduzieren. Zusätzlich sind ECC-Operationen schneller als solche des RSA-Verfahrens.
Die Verschlüsselung bei der ECC beruht auf der Berechnung eines Produkts zweier Operanden, das als "kP" bezeichnet wird. Dabei ist P ein Punkt auf einer elliptischen Kurve (engl. Elliptic Curve, EC) und k ist eine große Zahl. Die "kP"-Multiplikation basiert auf der Punkt-Verdopplung und der Punkt-Addition. Alle EC-Punkt-Operationen basieren auf Addition, Subtraktion, Quadrierung, Multiplikation und Division in einem ausgewählten Galois-Körper (engl. Galois field), der mit gleicher Bedeutung auch als endlicher Körper oder, in Anlehnung an den englischen Begriff, als Galois-Feld (GF) bezeichnet wird.

*1.2 Multiplikation von Elementen eines Galois-Körpers*

Eine der Grundoperationen der elliptischen Kurvenkryptographie ist also die Multiplikation von Elementen aus einem Galois-Körper. Dabei kommen in unterschiedlichen Ausbildungen der elliptischen Kurvenkryptographie unterschiedliche Galois-Körper zur Verwendung, die nachfolgend kurz vorgestellt werden.

a) GF ($2^n$)

Die Elemente des Galois-Körpers GF($2^n$) mit einem irreduziblen Polynom $f(x) = f_n \cdot x^n + f_{n-1} \cdot x^{n-1} +...+ f_0 \cdot x^0$ des Grades n sind die Polynome A(x) des Grades (n-1): $A(x) = a_{n-1} \cdot x^{n-1} + a_{n-2} \cdot x^{n-2} + ... + a_0 \cdot x^0$, wobei deren Koeffizienten $f_i, a_i \in GF(2)$, also 0 oder 1 sind. Aus diesem Grund sind die Polynome als Bitfolgen der Länge n darstellbar, wobei sowohl die Addition als auch die Subtraktion zweier Polynome A(x) und B(x) als bitweise Exklusiv-Oder (XOR)-Operationen durchzuführen ist. Im Rahmen dieser Anmeldung ist die XOR-Operation als "$\oplus$" gekennzeichnet, und die Elemente des GF($2^n$) sind als Bitfolgen der Länge n folgendermaßen dargestellt: $A(x) = \sum_{i=0}^{n-1} a_i \cdot x^i \equiv \bigoplus_{i=0}^{n-1} a_i \cdot 2^i$. Das Symbol "+" bezeichnet dagegen hier immer eine gewöhnliche Addition.
Die Multiplikation zweier Polynome $A(x)$ und $B(x)$ ist folgendermaßen definiert:

$$C'(x) = A(x) \cdot B(x) \quad mod \quad f(x) = C(x) \quad mod \quad f(x)$$

Diese Multiplikation besteht aus folgenden zwei Schritten:

*Schritt 1 - Berechnung des Polynoms C(x) vom Grad (2n-2):*

$$C(x) = A(x) \cdot B(x) = \left(a_{n-1} \cdot x^{n-1} + ... + a_0 \cdot x^0\right) \cdot \left(b_{n-1} \cdot x^{n-1} + ... + b_0 \cdot x^0\right) = c_{2n-2} \cdot x^{2n-2} + ... + c_0 \cdot x^0 \equiv \bigoplus_{i=0}^{2n-2} c_i \cdot 2^i$$

$$c_0 = \left(a_0 \cdot b_0\right) \bmod 2 = a_0 \cdot b_0$$

$$c_1 = \left(a_0 \cdot b_1 + a_1 \cdot b_0\right) \bmod 2 = a_0 \cdot b_1 \oplus a_1 \cdot b_0$$

$$c_2 = \left(a_0 \cdot b_2 + a_1 \cdot b_1 + a_2 \cdot b_0\right) \bmod 2 = a_0 \cdot b_2 \oplus a_1 \cdot b_1 \oplus a_2 \cdot b_0$$

$$c_{n-1} = \left(a_0 \cdot b_{n-1} + a_1 \cdot b_{n-2} + \ldots + a_{n-2} \cdot b_1 + a_{n-1} \cdot b_0\right) \bmod 2 = a_0 \cdot b_{n-1} \oplus a_1 \cdot b_{n-2} \oplus \ldots \oplus a_{n-2} \cdot b_1 \oplus a_{n-1} \cdot b_0$$
$$c_n = \left(a_1 \cdot b_{n-1} + a_2 \cdot b_{n-2} + \ldots + a_{n-2} \cdot b_2 + a_{n-1} \cdot b_1\right) \bmod 2 = a_1 \cdot b_{n-1} \oplus a_2 \cdot b_{n-2} \oplus \ldots \oplus a_{n-2} \cdot b_2 \oplus a_{n-1} \cdot b_1$$
$$\ldots$$
$$c_{2n-3} = \left(a_{n-2} \cdot b_{n-1} + a_{n-1} \cdot b_{n-2}\right) \bmod 2 = a_{n-2} \cdot b_{n-1} \oplus a_{n-1} \cdot b_{n-2}$$
$$c_{2n-2} = \left(a_{n-1} \cdot b_{n-1}\right) \bmod 2 = a_{n-1} \cdot b_{n-1}$$

Die Multiplikation (Symbol: "•") zweiter Bitwerte miteinander ist als UND-Operation definiert.
*Schritt 2 - Reduktion des C(x)-Polynoms:*

$$C'(x) = C(x) \quad mod \quad f(x)$$

b) GF(p)

Die p Elemente des Galois-Körpers GF(p) bilden ganze Zahlen zwischen 0 und p-1. Die Addition und Multiplikation im GF(p) sind als die bekannte "Addition modulo p" bzw. "Multipliation modulo p" definiert. Beispielsweise gilt im GF(7) 5+5=3 und 4+3=0, sowie 5·5=4 und 4·3=5. Die Addition wie auch die Multiplikation zweier Elemente aus GF(p) erfolgt immer in 2 folgenden Schritten:

Schritt 1 - Berechnung der Addition (Multiplikation) ganzer Zahlen

Schritt 2 - Reduktion des Ergebnisses des Schrittes 1 modulo p

Die Elemente des Galois-Körpers GF(p) sind als Dualzahlen (also als Bitfolgen) darstellbar.
Eine bestimmte Bitfolge der Länge n kann also zum einen als Element des Galois-Körpers $GF(2^n)$ und zum anderen als Dualzahl-Darstellung eines Elements eines Galois-Körpers GF(p) interpretiert werden. Dies verdeutlicht, dass für die Verschlüsselung ein und derselben Bitfolge einer vorgegebenen Länge die elliptische Kurvenkryptographie wahlweise unter Verwendung der Operationen des Galois-Körper $GF(2^n)$ oder des GF(p) zur Verfügung steht.

*1.3 Hardware-Beschleuniger für kryptographische Operationen*

Hardwarebeschleuniger für Kryptographie-Operationen mit öffentlichen Schlüsseln sind ideale Mittel, um die Berechnungszeit und den Energieverbrauch zu reduzieren. Eine nicht optimierte Umsetzung kryptographischer Operationen führt jedoch zu einem relativ großen Flächenbedarf auf einem Chip. Dies erschwert die Anwendung von Hardwarebeschleunigern unter wirtschaftlichen Gesichtspunkten. Die Randbedingungen des Designs von Hardwarebeschleunigern sind daher die benötige Berechnungszeit, der Energieverbrauch sowie der Flächenbedarf.

2. Erfindung

Da also unterschiedliche Anwendungsfälle der elliptischen Kurvenkryptographie zu verschlüsselnde oder zu entschlüsselnde Bitfolgen in einigen Fällen als Elemente des Galois-Körper $GF(2^n)$ und in anderen Fällen als Elemente des Galois-Körpers GF(p) behandeln, wäre es für den Nutzer einer Verschlüsselungsanwendung für die Datenkommunikation mit unterschiedlichen Empfängern wünschenswert, wahlweise das eine oder das andere Kryptographie-Verfahren nutzen zu können. Das bedeutet, die durchzuführenden Rechenoperationen, und dabei die aufwändige Multiplikationsoperation, sollte wahlweise in einem der beiden Galois-Körper durchzuführen sein.
Gemäß einem ersten Aspekt der Erfindung wird eine Vorrichtung vorgeschlagen - zur Ermittlung eines Produktes C zweier in Form endlicher Bitfolgen $A = a_{n-1}a_{n-2}...a_1a_0$ und $B = b_{n-1}b_{n-1}...b_1b_0$ vorliegender Faktoren als Produkt im Galois-Körper GF(p) oder als Produkt im Galois-Körper GF($2^n$),

umfassend

**a) eine Segmentsummen-Stufe,**

die ausgebildet ist, die Bitfolgen A und B in Segmente zu zerlegen und nach einem vordefinierten Summationsplan Segmentsummen von vorbestimmten Segmenten der jeweils selben Bitfolge wahlweise im Galois-Körper GF(p) oder im Galois-Körper GF ($2^n$) zu ermitteln und auszugeben;

- dabei die jeweilige Segmentsumme im Galois-Körper GF(p) durch Bildung eines Segmentsummen-Zwischenergebnisses mittels Addition der betreffenden Bitwerte sowie Ermitteln und Anfügen eines nächsthöherwertigen Übertragsbits an das Segmentsummen-Zwischenergebnis zu ermitteln

- und das Segmentsummen-Zwischenergebnis als die jeweilige Segmentsumme im Galois-Körper GF($2^n$) auszugeben;

**b) eine Teilprodukt-Stufe,**

die ausgebildet ist, Teilprodukte von Segmenten der Bitfolgen A und B und Teilprodukte von Segmentsummen, die die Segmentsummen-Stufe ausgibt, wahlweise im Galois-Körper GF(p) oder im Galois-Körper GF ($2^n$) zu ermitteln und auszugeben;

**c) eine Akkumulations-Einheit,**

die ausgebildet ist, anhand der Segmentsummen und der Teilprodukte

- in einer ersten Akkumulations-Stufe

  - als erste Akkumulations-Zwischenergebnisse Ergebnisse von XOR-Verknüpfungen im Galois-Körper GF(p) zu addierender, also mit positivem Vorzeichen versehener und nach einem ersten Teil einer vordefinierten Akkumulationsvorschrift zu akkumulierender Teilprodukte zu ermitteln und auszugeben, und

  - als zweite Akkumulations-Zwischenergebnisse bei einer Addition der nach dem ersten Teil der vordefinierten Akkumulationsvorschrift jeweils zu akkumulierenden Teilprodukte zusätzlich zu den ersten Akkumulations-Zwischenergebnissen anfallende Übertragsbits zu ermitteln und auszugeben;

- in einer zweiten Akkumulations-Stufe

  - als dritte Akkumulations-Zwischenergebnisse Ergebnisse von XOR-Verknüpfungen im Galois-Körper GF(p) zu subtrahierender, also mit negativem Vorzeichen versehener und nach einem zweiten Teil der vordefinierten Akkumulationsvorschrift zu akkumulierender Teilprodukte zu ermitteln und auszugeben, und

  - als vierte Akkumulations-Zwischenergebnisse bei einer Addition der nach dem zweiten Teil der vordefinierten Akkumulationsvorschrift jeweils zu akkumulierenden Teilprodukte zusätzlich zu den zweiten Akkumulations-Zwischenergebnissen anfallende Übertragsbits zu ermitteln und auszugeben;

**d) eine Produktermittlungs-Einheit, mit**

- einer ersten Produktermittlungs-Stufe, die ausgebildet ist,

  die ersten und zweiten Akkumulations-Zwischenergebnisse nach der Akkumulationsvorschrift im Galois-Körper GF(p) zur Bildung eines ersten Produkt-Zwischenergebnisses zu addieren;

  die dritten und vierten Akkumulations-Zwischenergebnisse nach der Akkumulationsvorschrift im Galois-Körper GF(p) zur Bildung eines zweiten Produkt-Zwischenergebnisses zu addieren; und

- zur Ermittlung des Produktes C im Galois-Körper GF(p) das zweite vom ersten Produkt-Zwischenergebnis zu subtrahieren und als zu reduzierendes Produkt C im Galois-Körper GF(p) auszugeben; sowie mit

einer zweiten Produktermittlungs-Stufe, die ausgebildet ist,

ein Ergebnis einer XOR-Verknüpfung des ersten und des dritten Akkumulations-Zwischenergebnisses zu ermitteln und als zu reduzierendes Produkt C im Galois-Körper GF($2^n$) auszugeben.

Die erfindungsgemäße Vorrichtung eignet sich zur Ermittlung des Produktes C in beiden Galois-Körpern. Sie ermöglicht sie die wahlweise Ermittlung des Produktes C in einem der beiden genannten Galois-Körper GF(p) und GF($2^n$) auf eine besonders flächen- und energiesparende Weise. Sie erweitert damit das Anwendungsfeld von Hardwarebeschleunigern für Kryptographie-Operationen. Sogar eine parallele, also synchrone Ermittlung und Ausgabe des Produktes C ist in einer speziellen, jedoch derzeit nicht bevorzugten Ausführungsform möglich.

Eine Ersparnis von Chipfläche und Energieaufwand im Betrieb gelingt bei der erfindungsgemäßen Vorrichtung auf der Grundlage der Erkenntnis, dass die Ergebnisse einiger Operationen, die zur Ermittlung des Produktes im Galois-Körper GF($2^n$) erforderlich sind, aus Zwischenergebnissen der entsprechenden Operationen abgeleitet werden, die zur Ermittlung des Produktes im Galois-Körper GF(p) durchzuführen sind. Durch die Umsetzung dieser Erkenntnis in der erfindungsgemäßen Vorrichtung gelingt es, den Flächen- und Energiebedarf beispielsweise der Segment-Summen-Stufe und der Akkumulationseinheit gegenüber einem Design mit zwei parallelen, unabhängigen Multiplizierern für die beiden Galois-Körper deutlich zu reduzieren. Zur Erzielung der Flächenersparnis macht sich die Vorrichtung insbesondere die Erkenntnis zunutze, dass ein Segmentsummen-Zwischenergebnis im Galois-Körper GF(p) unmittelbar als entsprechende Teilsumme im Galois-Körper GF($2^n$) verwendet werden kann. Eine Segmentsumme im Galois-Körper GF($2^n$) stellt sich erfindungsgemäß beispielsweise als Zwischenergebnis der Ermittlung der Segmentsumme im Galois-Körper GF(p) dar. Ähnliches ist in der der Akkumulations-Einheit umgesetzt.

Nach welchen Prinzipien die Akkumulationsvorschrift zu definieren ist, um die flächen-und energiesparende Produktermittlung für beide Galois-Körper erzielen zu können, wird im Rahmen dieser Anmeldung anhand von konkreten Beispielen erläutert. Diese Beispiele ermöglichen es, für jedes Paar von Galois-Körpern GF($2^n$) und GF(p) eine entsprechende Akkumulationsvorschrift zu entwerfen und in einer Vorrichtung gemäß der vorliegenden Erfindung zu implementieren.

Nachfolgend werden Ausführungsbeispiele der erfindungsgemäßen Vorrichtung beschrieben. Die zusätzlichen Merkmale der Ausführungsbeispiele können miteinander kombiniert werden, um weitere Ausführungsformen der erfindungsgemäßen Vorrichtung zu bilden.

Die erfindungsgemäße Vorrichtung ist vorzugsweise als Hardware-Beschleunigungseinheit, also in Form eines integrierten Schaltkreises auf einem Chip implementiert.

Eine besonders große Ersparnis von Chipfläche kann erreicht werden, indem die Teilprodukt-Stufe ausgebildet ist, die Teilprodukte nach einem entsprechenden Akkumulationsplan in mehreren Taktschritten zu akkumulieren. Dies ermöglicht die Verwendung einer besonders geringen Anzahl von Multiplizierern in der Teilprodukt-Stufe.

Vorteilhaft ist, wenn die Akkumulationseinheit zusätzlich ausgebildet ist, die Akkumulation nach der Akkumulationsvorschrift in der ersten oder der zweiten Akkumulations-Stufe zumindest teilweise iterativ durchzuführen, indem einige der ersten oder dritten Akkumulations-Zwischenergebnisse als Operand bei der Ermittlung weiterer erster bzw. dritter Akkumulations-Zwischenergebnisse verwendet werden. Bei dieser Ausführungsform enthält die Akkumulationseinheit zusätzlich eine dritte Akkumulations-Stufe, welche ausgebildet ist, als Korrektur-Zwischenergebnisse Werte von Korrekturtermen im Galois-Körper GF(p) zu ermitteln und auszugeben, wobei die Korrekturterme Akkumulationsfehler der ersten oder zweiten Akkumulationsstufe im Galois-Körper GF(p) korrigieren. Diese Akkumulationsfehler führt die iterative Durchführung der Akkumulation nach dem ersten oder zweiten Teil der Akkumulationsvorschrift ein. Die erste Produktermittlungs-Stufe der Produktermittlung-Einheit ist in dieser Ausführungsform zusätzlich ausgebildet, unter Verwendung aller Akkumulations-Zwischenergebnisse das zu reduzierende Produkt C im Galois-Körper GF(p) zu ermitteln und auszugeben. Bei dieser Ausführungsform ist der Flächengewinn durch Verringerung der Komplexität der ersten und zweiten Akkumulationsstufe der Akkumulationseinheit größer als der zusätzliche Flächenbedarf, den die zu ergänzende dritte Akkumulationsstufe in der Akkumulationseinheit erfordert. Zudem ermöglicht diese Variante eine schnellere Abarbeitung der Akkumulation.

In einem bevorzugten Ausführungsbeispiel ist die Akkumulations-Einheit ausgebildet, eine Akkumulationsvorschrift zu verwenden, welche bestimmte Teilprodukte des Produktes C unter Anwendung der ursprünglichen oder der generalisierten Karatsuba-Formel ermittelt.

Die ursprüngliche Karatsuba-Formel lautet

$$a_1b_2 + a_2b_1 = (a_1 + a_2)\,(b_1 + b_2) - a_1b_1 - a_2b_2.$$

Die generalisierte Karatsuba-Formel lautet

$$a_ib_j + a_jb_i = (a_i + a_j)\,(b_i + b_j) - a_ib_i - a_jb_j.$$

Die Anwendung der ursprünglichen oder der generalisierten Karatsuba-Formel ermöglicht eine iterative Ermittlung eines Teils des Produktes C. Auf diese Weise kann die Ermittlung des Produktes besonders effizient gestaltet werden, was insbesondere für eine schaltungstechnische Realisierung in einem Hardwarebeschleuniger günstig ist.

Um eine Bitfolge ausgeben zu können, deren Länge gleich der Länge der in die Produktermittlung eingehenden Faktoren A und B ist, ist in einer Ausführungsform eine Reduktionseinheit vorgesehen, die der Produktermittlungs-Einheit nachgeschaltet ist und die ausgebildet ist, eine von der ersten oder der zweiten Produktermittlungs-Stufe ausgegebene Bitfolge in eine kürzere Bitfolge zu transformieren, welche im betreffenden Galois-Körper GF(p) bzw. $GF(2^n)$ äquivalent ist zu der von der betreffenden Produktermittlungs-Stufe ausgegebenen Bitfolge. Solche Reduktionseinheiten sind im Stand der Technik wohl bekannt. Ein Beispiel ist in dem Dokument DE 10 2006 013 989 beschrieben.

In einem Anwendungsfall ist die erfindungsgemäße Vorrichtung eingerichtet, das Produkt C stets nur in nur einem einzigen Galois-Körper, also entweder stets im GF(p) oder stets im $GF(2^n)$ auszugeben. Bevorzugte alternative Ausführungsbeispiele der erfindungsgemäßen Vorrichtung ermöglichen einen Wechsel von einer Ausgabe des Produktes C im GF(p) zu einer Ausgabe im $GF(2^n)$ und umgekehrt. Hierzu weisen sie beispielsweise eine Steuereinheit auf, die mit der Segmentsummenstufe, der Teilprodukt-Stufe, der Akkumulations-Einheit und der Produktermittlungs-Einheit verbunden ist, und die ausgebildet ist, in Abhängigkeit von einem eingangsseitig anliegenden Auswahlsignal die Teilsegmentstufe, die Teilprodukt-Stufe, die Akkumulations-Einheit und die Produktermittlungs-Einheit entweder zur Ermittlung und Ausgabe des Produktes C als Produkt im Galois-Körper GF(p) oder zur Ermittlung und Ausgabe des Produktes C als Produkt im Galois-Körper $GF(2^n)$ anzusteuern.

Das Auswahlsignal kann beispielsweise manuell mit Hilfe einer Eingabe an einer Nutzerschnittstelle (Tastatur, Graphische Nutzerschnittstelle, Sprache) erzeugt werden, die mit der Steuereinheit verbunden ist. Dies dürfte in der Praxis jedoch eine Ausnahme sein, da Nutzer in der Regel nicht über Details eines verwendeten Verschlüsselungsalgorithmus informiert sind. Im Anwendungsfall ist es daher zumeist praktikabler, eine automatische Erzeugung des Steuersignals durch eine der Steuereinheit vorgeschaltete Krypto-Steuerstufe zu ermöglichen. Diese Krypto-Steuerstufe ist ausgebildet, für zu verschlüsselnde oder zu entschlüsselnde Daten die passende Ausgabe-Variante des Produktes C zu bestimmen, ein entsprechendes Auswahlsignal zu erzeugen und der Steuereinheit zuzuführen. Die Bestimmung kann durch Abfrage einer programmierbaren Voreinstellung erfolgen. Die Bestimmung kann auch anhand der Daten selbst erfolgen, indem in den anliegenden Daten ein Hinweis auf den Typ der Verschlüsselung ermittelt wird, oder durch einer Erkennung eines oder mehrerer Krypto-Steuersignale, die beispielsweise zwischen der Steuereinheit und einer zu ihr externen Einheit ausgetauscht werden. Solch ein Krypto-Steuersignal kann beispielsweise im zu verschlüsselnden oder zu entschlüsselnden Datenstrom enthalten sein.

Grundsätzlich ist es auch möglich, die Steuereinheit zusätzlich auszubilden, die Segmentsummen-Stufe, die Teilprodukt-Stufe, die Akkumulations-Einheit und die Produktermittlungs-Einheit bei Anliegen eines vordefinierten weiteren Auswahlsignals zur Ermittlung und Ausgabe des Produktes C sowohl als Produkt im Galois-Körper GF(p) als auch als Produkt im Galois-Körper $GF(2^n)$ anzusteuern.

Ihre Vorteile entfaltet die erfindungsgemäße Vorrichtung insbesondere, wenn zumindest die Segmentsummen-Stufe, die Teilprodukt-Stufe, die Akkumulations-Einheit und die Produktermittlungs-Stufe, als ASIC, also in Form einer oder mehrerer anwendungsspezifischer, das heißt nicht frei programmierbarer integrierter Schaltungen realisiert sind.

Ein bevorzugter Anwendungsfall der erfindungsgemäßen Vorrichtung ist ihr Einsatz in einer Kryptographievorrichtung.

Einen zweiten Aspekt der Erfindung bildet ein Verfahren

-    zur Ermittlung eines Produktes C zweier in Form endlicher Bitfolgen $A = a_{n-1}a_{n-2}...a_1a_0$ und $B = b_{n-1}b_{n-2}...b_1b_0$ vorliegender Faktoren wahlweise als Produkt im Galois-Körper GF(p) oder als Produkt im Galois-Körper $GF(2^n)$,,

umfassend

**a) eine Segmentsummen-Stufe,**

in der die Bitfolgen A und B in Segmente zerlegt und in der nach einem vordefinierten Summationsplan Segmentsummen von vorbestimmten Segmenten der jeweils selben Bitfolge wahlweise im Galois-Körper GF(p) oder im Galois-Körper GF (2n) ermittelt und ausgegeben werden;

- dabei die jeweilige Segmentsumme im Galois-Körper GF(p) durch Bildung eines Segmentsummen-Zwischenergebnisses mittels Addition der betreffenden Bitwerte sowie Ermitteln und Anfügen eines nächsthöherwertigen Übertragsbits an das Segmentsummen-Zwischenergebnis ermittelt werden

- und das Segmentsummen-Zwischenergebnis als die jeweilige Segmentsumme im Galois-Körper GF($2^n$) ausgegeben wird;

**b) eine Teilprodukt-Stufe,**

in der Teilprodukte von Segmenten der Bitfolgen A und B und Teilprodukte von Segmentsummen, die die Segmentsummen-Stufe ausgibt, wahlweise im Galois-Körper GF(p) oder im Galois-Körper GF ($2^n$) ermittelt und ausgegeben werden;

**c) eine Akkumulation,**

bei der anhand der Segmentsummen und der Teilprodukte

- in einer ersten Akkumulations-Stufe

  - als erste Akkumulations-Zwischenergebnisse Ergebnisse von XOR-Verknüpfungen im Galois-Körper GF(p) zu addierender, also mit positivem Vorzeichen versehener und nach einem ersten Teil einer vordefinierten Akkumulationsvorschrift zu akkumulierender Teilprodukte ermittelt und ausgegeben werden, und

  - als zweite Akkumulations-Zwischenergebnisse bei einer Addition der nach dem ersten Teil der vordefinierten Akkumulationsvorschrift jeweils zu akkumulierenden Teilprodukte zusätzlich zu den ersten Akkumulations-Zwischenergebnissen anfallende Übertragsbits ermittelt und ausgegeben werden;

- in einer zweiten Akkumulations-Stufe

  - als dritte Akkumulations-Zwischenergebnisse Ergebnisse von XOR-Verknüpfungen im Galois-Körper GF(p) zu subtrahierender, also mit negativem Vorzeichen versehener und nach einem zweiten Teil der vordefinierten Akkumulationsvorschrift zu akkumulierender Teilprodukte ermittelt und ausgegeben werden, und

  - als vierte Akkumulations-Zwischenergebnisse bei einer Addition der nach dem zweiten Teil der vordefinierten Akkumulationsvorschrift jeweils zu akkumulierenden Teilprodukte zusätzlich zu den zweiten Akkumulations-Zwischenergebnissen anfallende Übertragsbits ermittelt und ausgegeben werden;

**d) eine Produktermittlung,** bei der

- in einer ersten Produktermittlungs-Stufe

  die ersten und zweiten Akkumulations-Zwischenergebnisse nach der Akkumulationsvorschrift im Galois-Körper GF(p) zur Bildung eines ersten Produkt-Zwischenergebnisses addiert werden;

  die dritten und vierten Akkumulations-Zwischenergebnisse nach der Akkumulationsvorschrift im Galois-Körper GF(p) zur Bildung eines zweiten Produkt-Zwischenergebnisses addiert werden; und

- zur Ermittlung des Produktes C im Galois-Körper GF(p) das zweite vom ersten Produkt-Zwischenergebnis subtrahiert wird und als zu reduzierendes Produkt C im Galois-Körper GF(p) ausgegeben wird; sowie

- in einer zweiten Produktermittlungs-Stufe
  ein Ergebnis einer XOR-Verknüpfung des ersten und des dritten Akkumulations-Zwischenergebnisses ermittelt und als zu reduzierendes Produkt C im Galois-Körper GF($2^n$) ausgegeben wird.

Die Vorteile und bevorzugten Ausführungsformen des erfindungsgemäßen Verfahrens entsprechen denen der Vorrichtung des ersten Aspekts der vorliegenden Erfindung.

So wird vorzugsweise eine von der ersten oder der zweiten Produktermittlungs-Stufe ausgebebene Bitfolge in eine kürzere Bitfolge reduziert, welche der ausgegebenen Bitfolge im betreffenden Galois-Körper GF(p) bzw. GF $(2^n)$ äquivalent ist.

Die Akkumulation nach der Akkumulationsvorschrift in der ersten oder der zweiten Akkumulations-Stufe wird vorzugsweise zumindest teilweise iterativ durchgeführt, indem einige der ersten oder dritten Akkumulations-Zwischenergebnisse als Operand bei der Ermittlung weiterer erster bzw. dritter Akkumulations-Zwischenergebnisse verwendet werden. Weiterhin wird die Akkumulation zusätzlich mit Hilfe einer dritten Akkumulations-Stufe durchgeführt, welche als Korrektur-Zwischenergebnisse Werte von Korrekturtermen im Galois-Körper GF(p) ermittelt und ausgibt, wobei die Korrekturterme Akkumulationsfehler der ersten oder zweiten Akkumulationsstufe im Galois-Körper GF(p) korrigieren, welche die iterative Durchführung der Akkumulation nach dem ersten oder zweiten Teil der Akkumulationsvorschrift einführt. Schließlich korrigiert die erste Produktermittlungs-Stufe der Produktermittlung zusätzlich die ermittelte Differenz zwischen dem ersten und zweiten Produkt-Zwischenergebnis mit Hilfe der Korrektur-Zwischenergebnisse und gibt sie erst dann als das zu reduzierende Produkt C im Galois-Körper GF(p) aus.

Das erfindungsgemäße Verfahren ist in bevorzugten Ausführungsbeispielen Teil eines Kryptographieverfahrens zur Verwendung in einer elektronischen Kryptographievorrichtung.

3. Kurzbeschreibung der Figuren

Nachfolgend werden weitere Ausführungsbeispiele unter Heranziehung der Figuren erläutert. Es zeigen:

Fig. 1    eine schematische Darstellung eines Beispiels der Ermittlung eines Produkts zweier Dualzahlen nach dem Stand der Technik ("Schul-Multiplikation");

Fig. 2    eine verallgemeinerte Darstellung der Fig. 1;

Fig. 3    eine tabellarische Darstellung der Produktermittlung im GF(p) entsprechend Fig. 2;

Fig. 4    eine schematische Darstellung der Ermittlung eines Produkts zweier Polynome im GF $(2^n)$ nach dem Stand der Technik in Analogie zum Produkt Fig. 1;

Fig. 5    eine tabellarische Darstellung der Produktermittlung im GF $(2^n)$ in Analogie zur Fig. 3;

Fig.6    eine schematische Darstellung der parallelen Produktermittlung im GF(p) und im GF $(2^n)$ gemäß einem Ausführungsbeispiel der vorliegenden Erfindung;

Fig. 7 bis 10    unterschiedliche Stadien der Erstellung eines Akkumulationsplans für die wahlweise Produktermittlung im GF(p) oder im GF $(2^n)$ gemäß einem Ausführungsbeispiel der vorliegenden Erfindung;

Fig. 11    eine schematische Darstellung eines Verfahrens zur wahlweisen oder parallelen Produktermittlung im GF(p) und im GF $(2^n)$ gemäß einem Ausführungsbeispiel der vorliegenden Erfindung;

Fig. 12    eine schematische Darstellung eines Verfahrens zur Produktermittlung wahlweise im GF(p) und im GF $(2^n)$ gemäß einem Ausführungsbeispiel der vorliegenden Erfindung;

Fig. 13    eine vereinfachtes Blockdiagram einer Vorrichtung zur Durchführung des Verfahrens der Fig. 8.

Fig. 14    eine vereinfachtes Blockdiagram einer Vorrichtung zur Durchführung des Verfahrens der Fig. 11.

4. Detaillierte Beschreibung von Ausführungsbeispielen

Nachfolgend werden zunächst Grundlagen der in dieser Anmeldung verwendeten tabellarischen Darstellung der Multiplikation erläutert.

*4.1 Tabellarische Darstellung der binären Multiplikation ganzer Zahlen*

Zunächst wird die Multiplikation zweier ganzer Dualzahlen (Binärzahlen) kurz erläutert, um anschließend die Vorteile der tabellarischen Darstellung (TD) der Multiplikation zu zeigen. Diese Multiplikation entspricht dem Schritt 1 der Multiplikation der GF(p)-Elemente. Dabei werden zunächst Dezimalzahlen der Deutlichkeit halber mit einer tiefgestellten "10" und Binärzahlen mit einer tiefgestellten "2" gekennzeichnet.

Als Beispiel wird das folgende Produkt gewählt: $13_{10} \cdot 11_{10} = 143_{10}$.

$$13_{10} = 1101_2 \qquad = \qquad A = a_3\ a_2\ a_1\ a_0$$

$$11_{10} = 1011_2 \qquad = \qquad B = b_3\ b_2\ b_1\ b_0$$

$$143_{10} = 10001111_2 \ = \qquad C = c_7\ c_6\ c_5\ c_4\ c_3\ c_2\ c_1\ c_0$$

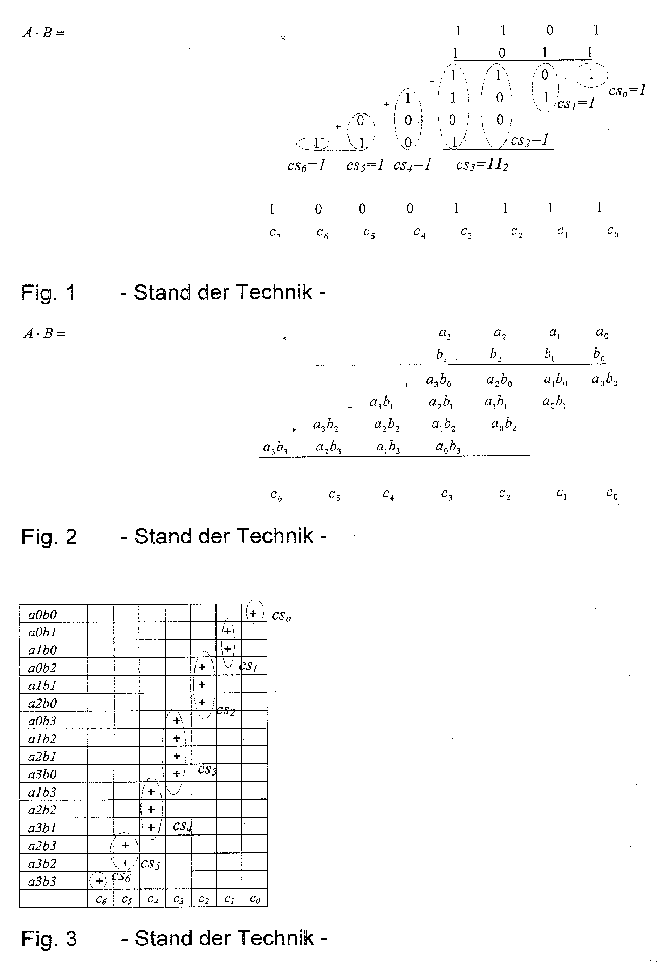

Das Produkt C=A·B kann nach dem in Fig. 1 wiedergegebenen Schema berechnet werden.

Bekannte Implementierungen arbeiten ein Produkt entsprechend der in Fig. 1 wiedergegebenen, aus dem elementaren Schulunterricht bekannten Multiplikationsschema ab. Danach werden die einzelnen Bitstelle des Produktes der beiden Binärzahlen $1101_2$ und $1011_2$ durch Summation der für jede Bitstelle ermittelten und entsprechend der Wertigkeit der Bitstellen verschobenen Teilprodukte Bitstellen für Bitstelle addiert, wobei Übertragsbits zur Teilsumme $cs_i$ des jeweils nächst höherwertigen Bits $c_i$ des Produktes C hinzuaddiert werden.

Abstrahiert man vom konkreten Berechnungsbeispiel, so lässt sich ein Produkt zweier 4 Bit breiter Operanden wie in Fig. 2 dargestellt darstellen.

Als Formel ausgedrückt:

$$A \cdot B = (a_3 \cdot 2^3 + a_2 \cdot 2^2 + a_1 \cdot 2^1 + a_0 \cdot 2^0) \cdot (b_3 \cdot 2^3 + b_2 \cdot 2^2 + b_1 \cdot 2^1 + b_0 \cdot 2^0) =$$
$$= cs_6 \cdot 2^6 + cs_5 \cdot 2^5 + cs_4 \cdot 2^4 + cs_3 \cdot 2^3 + cs_2 \cdot 2^2 + cs_1 \cdot 2^1 + cs_0 \cdot 2^0,$$

*wobei*

$$cs_0 = a_0 \cdot b_0$$

$$cs_1 = a_0 \cdot b_1 + a_1 \cdot b_0$$

$$cs_2 = a_0 \cdot b_2 + a_1 \cdot b_1 + a_2 \cdot b_0$$

$$cs_3 = a_0 \cdot b_3 + a_1 \cdot b_2 + a_2 \cdot b_1 + a_3 \cdot b_0$$

$$cs_4 = a_1 \cdot b_3 + a_2 \cdot b_2 + a_3 \cdot b_1$$

$$cs_5 = a_2 \cdot b_3 + a_3 \cdot b_2$$

$$cs_6 = a_3 \cdot b_3$$

Eine tabellarische Darstellung (TD) dieser Terme ist in Fig. 3 wiedergegeben. In der Tabelle der Fig. 3 ist mit "+" jeweils diejenige Stelle bezeichnet, an der jedes Teil-Produkt $a_i b_j$ steht. Die Summe der Teil-Produkte (TP) in jeder Spalte kann wegen eines Übertrags größer als 1 Bit sein. Aber jedes einzelne TP ist (hier) nur 1 Bit groß.

*4.2 Multiplikation im GF($2^n$)*

Die Elemente des Galois-Feldes GF($2^n$) werden auch als Polynome bezeichnet, sind im Ergebnis jedoch Bitfolgen darstellbar, die besonderen Rechenvorschriften unterliegen.

Die Multiplikation der Elemente aus GF($2^n$) (ohne Reduktion) ist zunächst auch mit der oben angegebenen Formel definierbar, aber mit folgender Abweichung: die Addition ("+") ist ersetzt durch die XOR- Operation, symbolisiert durch "$\oplus$".

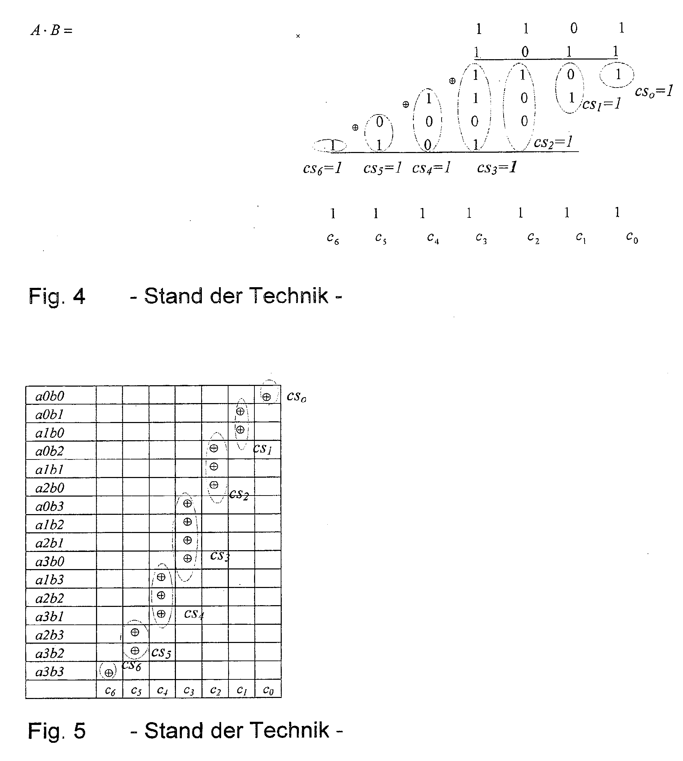

Für das oben verwendete Beispiel des Produktes von ($1011_2$) und ($1101_2$) erfolgt die Berechnung auf dem GF($2^n$) wie in Fig. 4 dargestellt. Die in Fig. 4 dargestellte Berechnung des Produktes im GF($2^n$) unterscheidet sich von der aus Fig. 1 darin, dass keine Übertragsbits berücksichtigt werden müssen.

Die tabellarische Darstellung der Fig. 5 gleicht ansonsten der tabellarischen Darstellung in Fig. 3, mit der Ausnahme, dass die Additionsoperation durch die XOR-Operation ersetzt ist. Aufgrund der XOR-Operation sind hier alle Werte "$cs_i$" nur 1 Bit groß, was die Berechnung der Bits des Produktes der Polynome im Vergleich zu "normalen" Zahlen erleichtert. Denn aufgrund der Verwendung der XOR-Operation sind die "$cs_i$" und "$c_i$" gleich.

*4.3 Kombinierte Ermittlung der Produkte im GF($2^n$) und im GF($p$)*

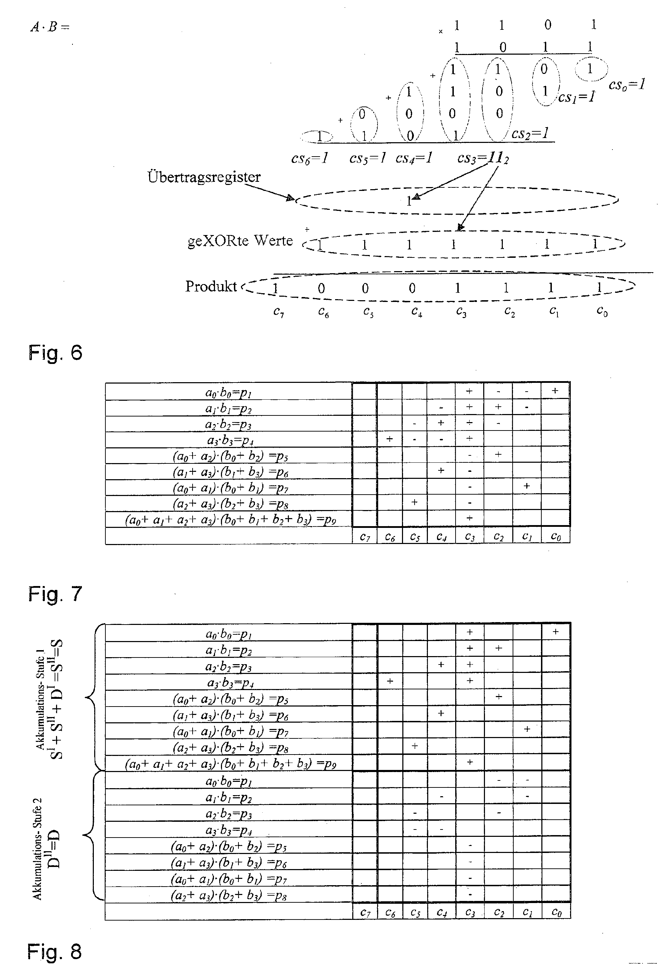

Die in Fig. 6 dargestellte kombinierte Ermittlung des Produktes $A \cdot B$ sowohl im GF($p$) als auch im GF($2^n$) basiert auf einer Zwischenspeicherung eines Zwischenergebnisses der Multiplikation GF($p$). Dieses Zwischenergebnis bilden die Werte "$cs_i$" ohne Berücksichtigung von Übertragsbits. Denn das Zwischenergebnis der vor Addierung der Übertragsbits zu den jeweiligen Bitstellen ist das Produkt im GF($2^n$). Die Übertragsbits können vor der Addition in einem oder mehreren Registern zwischengespeichert werden. Auf diese Art und Weise kann bei einem Multiplizierer das entsprechende Produkt im GF($2^n$) als Zwischenergebnis der Ermittlung des Produkts GF($p$) abgegriffen werden.

*4.4 Akkumulation*

Die Akkumulationsvorschrift spiegelt sich je nach Implementierung im Schaltungsdesign, also in der Anordnung und Verknüpfung von Gattern zur Durchführung von arithmetischer bzw. logischer Operationen, oder in einer Software wieder, die ein programmgesteuerter Prozessor zur Durchführung der Produktermittlung in seinen Arbeitsspeicher geladen hat.

Zunächst werden nachfolgend Grundlagen der erfindungsgemäßen Akkumulation erläutert. Anschließend werden Beispiele vorgestellt.

4.4.1 Grundlagen

Der analytische Ausdruck eines noch nicht reduzierten Produktes der GF($p$)-Elemente beinhaltet oft nicht nur positive Teilprodukte (Segment-Produkte), die addiert werden müssen, sondern auch die negative Teilprodukte, die subtrahiert werden müssen.

Zerlegt man die Faktoren A und B in je zwei Segmente der Form

$$A = a_{2m-1} \ldots a_m a_{m-1} \ldots a_0 = \left( A_1 \cdot 2^m + A_0 \right)$$

$$B = b_{2m-1} \ldots b_m b_{m-1} \ldots b_0 = \left( B_1 \cdot 2^m + B_0 \right),$$

wobei die niederwertigsten Segmente $A_0$ und $B_0$ die Bitfolgen der Länge m sind und die höchstwertigen Segmente $A_1$ und $B_1$ entweder auch die Bitfolgen der Länge m sind (falls n gerade ist) oder bis zu der Länge m erweiterte Bitfolgen sind.

Karatsubas Multiplikations-Formel bei der Segmentierung der Faktoren in 2 Teile ist:

$$A \cdot B = \left( A_1 \cdot 2^m + A_0 \right) \cdot \left( B_1 \cdot 2^m + B_0 \right) = A_1 B_1 \cdot 2^{2m} + \left( \left( A_0 + A_1 \right)\left( B_0 + B_1 \right) - A_0 B_0 - A_1 B_1 \right) \cdot 2^m + A_0 B_0$$

Eine alternative Zerlegung beider Faktoren A und B in je drei Segmente ergibt

$$A \cdot B = (A_2 \cdot 2^{2m} + A_1 \cdot 2^m + A_0 \cdot 2^0) \cdot (B_2 \cdot 2^{2m} + B_1 \cdot 2^m + B_0 \cdot 2^0) =$$
$$= \underbrace{A_2 B_2}_{=CS_4} \cdot 2^{4m} + \underbrace{((A_2 + A_1)(B_2 + B_1) - A_1 B_1 - A_2 B_2)}_{=CS_3} \cdot 2^{3m} + \underbrace{((A_2 + A_0)(B_2 + B_0) - A_0 B_0 - A_2 B_2 + A_1 B_1)}_{=CS_2} \cdot 2^{2m} +$$
$$+ \underbrace{((A_0 + A_1)(B_0 + B_1) - A_1 B_1 - A_0 B_0)}_{=CS_1} \cdot 2^m + \underbrace{A_0 B_0}_{=CS_0} \cdot 2^0$$

Die $CS_i$-Terme, die für die Ermittlung des Produktes C benötigt werden, werden also aus Teilprodukten errechnet, die teils addiert und teils subtrahiert werden.

Eine weitere alternative Zerlegung der Faktoren A und B in je vier Segmente, die mit rekursiver Anwendung von Karatsubas Multiplikations-Formel ermittelt wurde, ergibt

$$A \cdot B = \left(A_3 \cdot 2^{3m} + A_2 \cdot 2^{2m} + A_1 \cdot 2^{1m} + A_0\right) \cdot \left(B_3 \cdot 2^{3m} + B_2 \cdot 2^{2m} + B_1 \cdot 2^{1m} + B_0\right) =$$
$$= A_0 B_0 \cdot 2^0 + \left(- A_0 B_0 - A_1 B_1 + (A_0 + A_1)(B_0 + B_1)\right) \cdot 2^{1m} +$$
$$+ \left(- A_0 B_0 + A_1 B_1 - A_2 B_2 + (A_0 + A_2)(B_0 + B_2)\right) \cdot 2^{2m} +$$
$$+ \begin{pmatrix} A_0 B_0 + A_1 B_1 + A_2 B_2 + A_3 B_3 - (A_0 + A_2)(B_0 + B_2) - \\ - (A_0 + A_1)(B_0 + B_1) - (A_1 + A_3)(B_1 + B_3) - (A_2 + A_3)(B_2 + B_3) + \\ + (A_0 + A_1 + A_2 + A_3)(B_0 + B_1 + B_2 + B_3) \end{pmatrix} \cdot 2^{3m} +$$
$$+ \left(- A_1 B_1 + A_2 B_2 - A_3 B_3 + (A_1 + A_3)(B_1 + B_3)\right) \cdot 2^{4m} +$$
$$+ \left(- A_2 B_2 - A_3 B_3 + (A_2 + A_3)(B_2 + B_3)\right) \cdot 2^{5m} +$$
$$+ A_3 B_3 \cdot 2^{6m}$$

Der auf der rechten Seite des Gleichheitszeichens stehende Term dieser Gleichung lässt sich wie bereits eingangs dieser Beschreibung erläutert auch in Form einer Tabelle darstellen. Für eine exemplarische tabellarische Darstellung wird die zusätzliche Annahme getroffen, dass die Faktoren A und B 4-Bit lang sind, also

$$A \cdot B = \left(a_3 \cdot 2^3 + a_2 \cdot 2^2 + a_1 \cdot 2^1 + a_0\right) \cdot \left(b_3 \cdot 2^3 + b_2 \cdot 2^2 + b_1 \cdot 2^1 + b_0\right)$$

und A und B entsprechend als Einzelbit-Sequenzen $A=(a_3 a_2 a_1 a_0)$ sowie $B=(b_3 b_2 b_1 b_0)$ darstellbar sind. Dieser einfache Fall entspricht der oben dargestellten Zerlegung in vier Segmente mit m=1. Die für diesen Fall geltende tabellarische Darstellung der Akkumulation von Teilprodukten ist in Fig. 7 wiedergegeben. Die einzelnen Teilprodukte in den Zeilen der Tabelle werden der Einfachheit halber dort und nachfolgend in der Beschreibung mit $p_1$ bis $p_9$ bezeichnet.

Die in dieser Darstellung aufgeführten Teilprodukte $p_1$ bis $p_9$ sind zur Erzielung einer erfindungsgemäßen Akkumulationsvorschrift in zwei Gruppen aufzuteilen, von denen der erste Teil nur positive Teilprodukte beinhaltet, und der zweite Teil nur negative Teilprodukte beinhaltet. Der algebraische Ausdruck des Produktes stellt sich entsprechend für 4 Segmente allgemein formuliert wie folgt dar:

$$A \cdot B = \left(A_3 \cdot 2^{3m} + A_2 \cdot 2^{2m} + A_1 \cdot 2^{1m} + A_0\right) \cdot \left(B_3 \cdot 2^{3m} + B_2 \cdot 2^{2m} + B_1 \cdot 2^{1m} + B_0\right) =$$

$$=$$

$$A_0 B_0 \cdot 2^0 + \left(\left(A_0 + A_1\right)\left(B_0 + B_1\right)\right) \cdot 2^{1m} +$$
$$+ \left(A_1 B_1 + \left(A_0 + A_2\right)\left(B_0 + B_2\right)\right) \cdot 2^{2m} +$$
$$+ \left(A_0 B_0 + A_1 B_1 + A_2 B_2 + A_3 B_3 + \left(A_0 + A_1 + A_2 + A_3\right)\left(B_0 + B_1 + B_2 + B_3\right)\right) \cdot 2^{3m} +$$
$$+ \left(A_2 B_2 + \left(A_1 + A_3\right)\left(B_1 + B_3\right)\right) \cdot 2^{4m} +$$
$$+ \left(\left(A_2 + A_3\right)\left(B_2 + B_3\right)\right) \cdot 2^{5m} +$$
$$+ A_3 B_3 \cdot 2^{6m}$$

$$+$$

$$+ \left(- A_0 B_0 - A_1 B_1\right) \cdot 2^{1m} +$$
$$+ \left(- A_0 B_0 - A_2 B_2\right) \cdot 2^{2m} +$$
$$+ \left(- \left(A_0 + A_2\right)\left(B_0 + B_2\right) - \left(A_0 + A_1\right)\left(B_0 + B_1\right) - \left(A_1 + A_3\right)\left(B_1 + B_3\right) - \left(A_2 + A_3\right)\left(B_2 + B_3\right)\right) \cdot 2^{3m} +$$
$$+ \left(- A_1 B_1 - A_3 B_3\right) \cdot 2^{4m} +$$
$$+ \left(- A_2 B_2 - A_3 B_3\right) \cdot 2^{5m}$$

Die entsprechende tabellarische Darstellung für den exemplarischen Fall m=1 zeigt Fig. 8. Diese Umformulierung der Terme ermöglicht eine Reduzierung der Anzahl der bei der Akkumulation zu berücksichtigenden Terme. Dies reduziert den Schaltungsaufwand einer Hardware-Implementierung.

Damit kann der Ausdruck auch durch Subtraktion zweier durch jeweils ausschließlich durch Addition von Teilprodukten gebildeter Operanden ermittelt werden:

$$A \cdot B = \left(A_3 \cdot 2^{3m} + A_2 \cdot 2^{2m} + A_1 \cdot 2^{1m} + A_0\right) \cdot \left(B_3 \cdot 2^{3m} + B_2 \cdot 2^{2m} + B_1 \cdot 2^{1m} + B_0\right) =$$

$$=$$

$$\left(\begin{array}{l} A_0 B_0 \cdot 2^0 + \left(\left(A_0 + A_1\right)\left(B_0 + B_1\right)\right) \cdot 2^{1m} + \\ + \left(A_1 B_1 + \left(A_0 + A_2\right)\left(B_0 + B_2\right)\right) \cdot 2^{2m} + \\ + \left(A_0 B_0 + A_1 B_1 + A_2 B_2 + A_3 B_3 + \left(A_0 + A_1 + A_2 + A_3\right)\left(B_0 + B_1 + B_2 + B_3\right)\right) \cdot 2^{3m} + \\ + \left(A_2 B_2 + \left(A_1 + A_3\right)\left(B_1 + B_3\right)\right) \cdot 2^{4m} + \\ + \left(\left(A_2 + A_3\right)\left(B_2 + B_3\right)\right) \cdot 2^{5m} + \\ + A_3 B_3 \cdot 2^{6m} \end{array}\right)$$

$$-$$

$$\left(\begin{array}{l} \left(A_0 B_0 + A_1 B_1\right) \cdot 2^{1m} + \\ + \left(A_0 B_0 + A_2 B_2\right) \cdot 2^{2m} + \\ + \left(\left(A_0 + A_2\right)\left(B_0 + B_2\right) + \left(A_0 + A_1\right)\left(B_0 + B_1\right) + \left(A_1 + A_3\right)\left(B_1 + B_3\right) + \left(A_2 + A_3\right)\left(B_2 + B_3\right)\right) \cdot 2^{3m} + \\ + \left(A_1 B_1 + A_3 B_3\right) \cdot 2^{4m} + \\ + \left(A_2 B_2 + A_3 B_3\right) \cdot 2^{5m} \end{array}\right)$$

Wird der Inhalt der beiden Klammern unter Verwendung der oben erläuterten Übertragsbit-Trennungs-Technik berechnet, besteht der Inhalt jeder Klammer aus zwei Zwischenergebnissen, von denen eines zur Ermittlung des Produkts im $GF(2^n)$ heranzuziehen ist und mit einer XOR-Operation zu ermitteln ist, und das zweite, nämlich die Übertragsbits, die zur Ermittlung des Produkts im $GF(p)$ durch Addition der Übertragsbits zum ersten Zwischenergebnis dienen.

Die zuletzt erzielte Darstellung des Produkts kann also als Differenz zweier Operanden - S und D - dargestellt werden. Die Akkumulation kann nun von dieser Darstellung ausgehend in unterschiedlichen Ausführungsbeispielen der Erfindung auf unterschiedliche Weise durchgeführt werden. Dies wird nachfolgend an einigen Beispielen erläutert. Dazu wird jeweils davon Gebrauch gemacht, dass jeder Operand, S und D, in zwei oder mehr Teile zerlegt werden kann. Der Einfachheit der Darstellung halber wird nachfolgend von zwei Teilen ausgegangen:

$$S = S^I + S^{II}$$

$$D = D^I + D^{II}$$

$$A \cdot B = S - D = S^I + S^{II} - (D^I + D^{II}) = S^I + S^{II} - D^I - D^{II}$$

### 4.4.2 Beispiel 1

$$A \cdot B = S - D = S^I + S^{II} - D^I - D^{II} + D^I - D^I = S^I + S^{II} + D^I - D^{II} - 2 \cdot D^I$$

In einer ersten Akkumulationsstufe wird der Term $S^I + S^{II} + D^I$ ermittelt, der also alle positiven, zu addierenden Teilprodukte enthält. In einer zweiten Akkumulationsstufe wird der Term $D^{II}$ ermittelt, der zu subtrahieren ist. In einer dritten Akkumulationsstufe wird der Term $2 \cdot D^I$ ermittelt. Die Akkumulation aller drei Terme im Sinne der obigen Gleichung ergibt das Produkt im GF(p). Für die Ermittlung des Produktes im GF($2^n$) genügt der Ausgang der Akkumulationsstufe 1 und 2, wobei zur Ermittlung die separierten Übertragsbits nicht berücksichtigt werden.

Fig. 8 zeigt ein Beispiel einer tabellarischen Darstellung einer solchen Akkumulationsvorschrift mit $S^I = D^I = 0$.

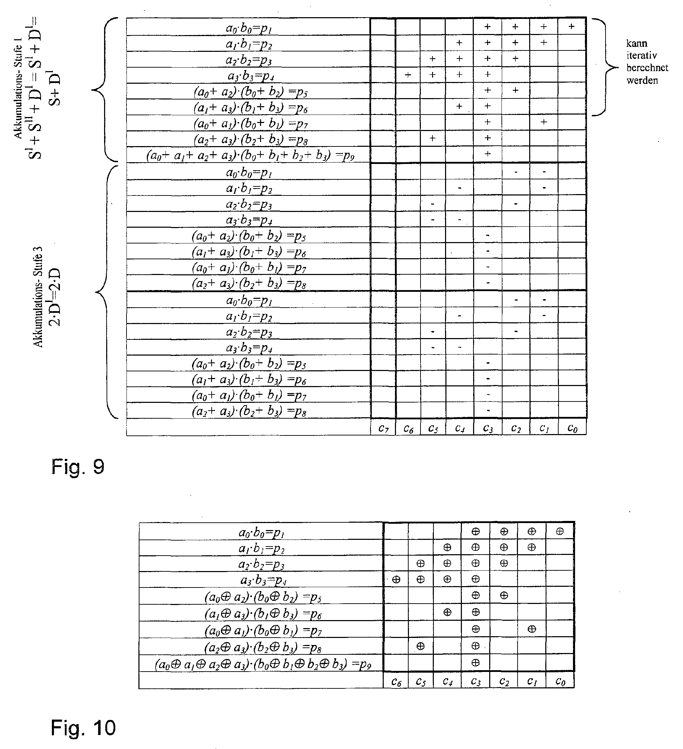

Fig. 9 zeigt ein Beispiel einer tabellarischen Darstellung einer solchen Akkumulationsvorschrift mit $S'' = D'' = 0$. Ein weiterer Schritt zur Implementierung der Akkumulationsvorschrift für eine besonders hardwareeffiziente parallele oder wahlweise Produkt-Ermittlung im GF($2^n$) und im GF(p) gelingt hier, indem einem ersten Teil der Tabelle, entsprechend der ersten Akkumulations-Stufe einer Implementierung in einer Vorrichtung, einfache Terme $a_ib_i$ mit gleichen Indizes in allen Spalten der Tabelle, welche mehrere solcher Terme akkumulieren, mit gleichem Vorzeichen iterativ akkumuliert werden. Hierbei kann also für die Ermittlung einer Summe der Teilprodukte, die zu der $c_i$-Spalte der TD gehört, eine andere, beispielsweise die Summe der Teilprodukte der vorhergehenden TD-Spalte $c_{i-1}$ oder der nachfolgenden $c_{i+1}$ -TD-Spalte verwendet werden. So kann die Ermittlung der Teil-Produkt-Summe $ps_{1235} = p_1 + p_2 + p_3 + p_5$ von $c_2$ auf dem Zwischen-Ergebnis der Ermittlung von $c_1$ -Spalte $ps_{12} = p_1 + p_2$ aufbauen, d. h. $ps_{1235} = ps_{12} + p_3 + p_5$. Auf ähnliche Weise ergibt sich anhand der Tabelle die Teil-Produkt-Summe $ps_{123456}$ der $c_3$-Spalte: $ps_{123456} = ps_{1235} + p_4 + p_6$. Auf diese Weise kann eine Anzahl von Rechenschritten für die Ermittlung der jeweiligen Teilprodukt-Summen gespart werden. So gelingt in vorteilhafter Weise die Akkumulation in der Akkumulationsstufe 1 mit einer weitestgehend iterativen Berechnung.

Durch diese Maßnahme werden vordergründig aufgrund "falscher" Vorzeichen in der gestalteten ersten Akkumulations-Stufe 1 Vorzeichen "Rechenfehler" eingeführt. Zur Kompensation, also Korrektur dieser "Rechenfehler" wird ein neuer Tabellenteil eingeführt, welcher die entsprechend notwendigen Korrekturterme ergänzt. Dieser schlägt sich in einer dritten Akkumulations-Stufe nieder.

Die Akkumulationsvorschrift der Fig. 9 lässt sich noch dadurch vereinfachen, dass die zweimalige Subtraktion der Teilprodukte $p_i$ in der Akkumulationsstufe 3 durch eine einmalige Subtraktion der doppelten Teilprodukte $2p_i$ ersetzt wird. Dies ist durch eine Linksverschiebung der Einträge in die Tabelle um eine Bitposition zu ermöglichen. Auf diese Weise kann die Wiederholung der Teilprodukte $p_i$ im unteren Drittel der Tabelle eingespart werden, was auch die Software- oder Hardware-Implementierung deutlich vereinfacht.

Die Akkumulationsvorschrift der Fig. 9 erfordert keine zweite Akkumulationsstufe.

Fig. 10 zeigt die tabellarische Darstellung der Multiplikations-Formel im GF($2^n$) unter Bedingung, dass die Faktoren die GF($2^n$)-Elemente sind. Es ist erkennbar, dass die Tabellenstruktur der Fig. 10, also die Operanden und ihre Verknüpfungen, der in Fig. 9 repräsentierten Struktur der ersten Akkumulationsstufe entspricht. Lediglich wird anstelle der Addition die XOR-Operation ausgeführt. Die Software- oder Hardware-Implementierung dieser Akkumulationsvorschrift ist offensichtlich besonders einfach, weil sie zum einen eine weitgehend iterative Ermittlung und zum anderen eine geringe Anzahl von Schritten (Tabellenzeilen) zur Akkumulation erfordert, und weil sie schließlich eine einheitliche Struktur der ersten Akkumulationsstufe für die Ermittlung im GF(p) und GF ($2^n$) liefert. Wie erläutert, kann durch die Verwendung der Übertragungsbit-Trennung die Akkumulation in beiden Galois-Körpern mit ein und derselben Akkumulationsstufe durchgeführt werden.

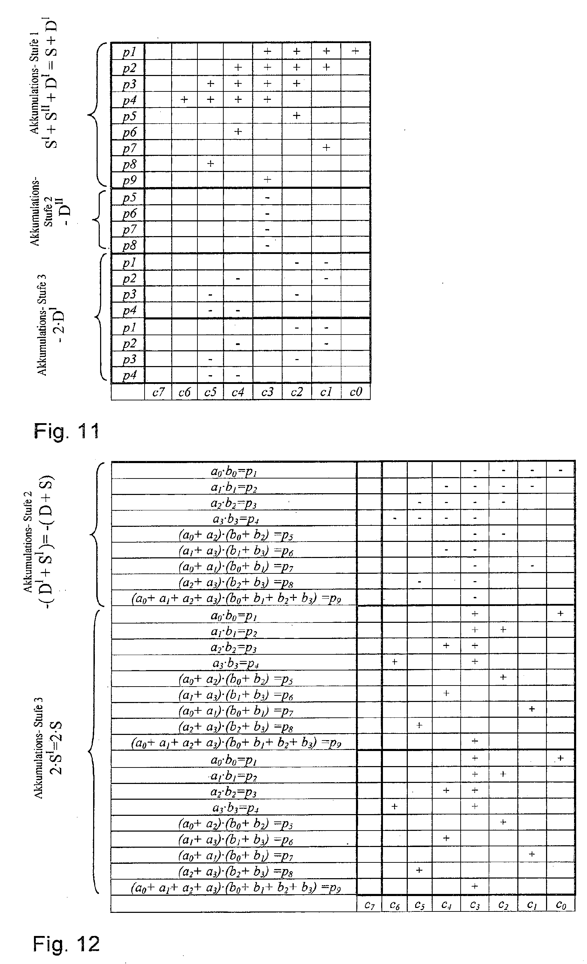

Fig. 11 zeigt ein Beispiel einer tabellarischen Darstellung einer Akkumulationsvorschrift mit $S^I\#0$, $S^{II}\#0$, $D^I\#0$, $D''\#0$. Die Kurzbezeichnungen p1 bis p9 der Teilprodukte verweisen auf die ausführliche Schreibweise dieser Terme in Fig. 8 und 9.

In diesem Beispiel sind drei Akkumulations-Stufen vorgesehen, deren jeweiliger Funktionsumfang in Fig. 11 erneut durch geschweifte Klammern verdeutlicht wird. In der ersten Akkumulations-Stufe werden nur mit positivem Vorzeichen zu berücksichtigende Terme akkumuliert, wobei zum Teil auch hier die iterative Berechnung ermöglicht ist. In der zweiten Akkumulations-Stufe werden nur mit negativem Vorzeichen zu berücksichtigende Terme akkumuliert. Die dritte Akkumulations-Stufe dient zur Korrektur in der ersten Akkumulations-Stufe zur Ermöglichung der iterativen Berechnung eingeführter zusätzlicher Terme.

Eine Variante des Beispiels 1 lässt sich in analoger Weise als

$$A \cdot B = S - D = S^I + S^{II} - D^{II} - D^I + D^{II} - D^{II} = S^I + S^{II} + D^{II} - D^I - 2 \cdot D^{II}$$

darstellen und führt zu ähnlich vorteilhaften Eigenschaften bei der Implementierung der Akkumulation.

### 4.4.3 Beispiel 2

$$A \cdot B = S - D = S^I + S^{II} - D^I - D^{II} + S^I - S^I = S^{II} - (D^I + D^{II} + S^I) + 2 \cdot S^I$$

In einer ersten Akkumulationsstufe wird der Term S" ermittelt. In einer zweiten Akkumulationsstufe wird der Term ($D^I + D^{II} + S^I$) ermittelt. In einer dritten Akkumulationsstufe wird der Term $2 \cdot S^I$ ermittelt. Die Akkumulation aller drei in den 3 Akkumulationsstufen ermittelten Terme im Sinne der obigen Gleichung mit Berücksichtigung aller Übertragsbits ergibt das Produkt im GF(p). Für die Ermittlung des Produktes im GF($2^n$) wird eine XOR-Verknüpfung der Ausgänge der Akkumulationsstufen 1 und 2 genutzt, wobei zur Ermittlung dieses Terms im GF ($2^n$) die in den Akkumulationsstufen separierten Übertragsbits nicht berücksichtigt werden.

Die Vorteile dieses Beispiels entsprechen ansonsten denen des Beispiels 1.

### 4.4.4 Beispiel 3

$$A \cdot B = S - D = S^I + S^{II} - D^I - D^{II} + S^{II} - S^{II} = S^I - (D^I + D^{II} + S^{II}) + 2 \cdot S^{II}$$

In einer ersten Akkumulationsstufe wird der Term $S^I$ ermittelt. In einer zweiten Akkumulationsstufe wird der Term ($D^I + D^{II} + S''$) ermittelt. In einer dritten Akkumulationsstufe wird der Term $2 \cdot S^{II}$ ermittelt. Die Akkumulation aller drei Terme im Sinne der obigen Gleichung mit Berücksichtigung aller Übertragsbits ergibt das Produkt im GF(p). Für die Ermittlung des Produktes im GF($2^n$) wird eine XOR-Verknüpfung der Ausgänge der Akkumulationsstufen 1 und 2 genutzt, wobei zur Ermittlung dieses Terms im GF ($2^n$) die in den Akkumulationsstufen separierten Übertragsbits nicht berücksichtigt werden.

Fig. 12 zeigt ein Beispiel einer tabellarischen Darstellung einer Akkumulationsvorschrift mit S" = $D^{II}$=0, wonach also S= $S^I$ und D= $D^I$ gilt. In diesem Beispiel sind in der ersten Akkumulations-Stufe keine Terme zu berücksichtigen. Daher werden nur eine zweite und eine dritte Akkumulations-Stufe benötigt, wobei die zweite Akkumulations-Stufe mit zum Teil iterativer Berechnung die mit negativem Vorzeichen zu berücksichtigenden Terme -( D + S) ermittelt, und die dritte Akkumulations-Stufe den Korrekturterm $2 \cdot S^I = 2 \cdot S$ ermittelt, der zur Ermittlung des Produktes im GF(p) zum Ergebnis der zweiten Akkumulations-Stufe hinzuzuaddieren ist.

Die Vorteile dieses Beispiels entsprechen ansonsten denen des Beispiels 1.

Eine Variante dieses Beispiels wird in analoger Weise entsprechend der Formel

$$A \cdot B = S - D = S^{I} + S^{II} - D^{I} - D^{II} + S^{I} - S^{I} = S^{II} - ( D^{I} + D^{II} + S^{I}) + 2 \cdot S^{I}$$

ermittelt.

Die vorstehenden Beispiele betreffen die Multiplikation zweier vierstelliger Bitfolgen. Die durchgeführten Maßnahmen sind jedoch allgemein für Bitfolgen jeglicher Länge anwendbar. Bei Akkumulation der Produkte von Bitfolgen größerer Länge ist ein entsprechend höherer Aufwand zur Ermittlung der Akkumulationsvorschrift erforderlich, der jedoch ohne Rückgriff auf grundsätzlich andere oder zusätzliche Maßnahmen zu bewältigen ist.

*4.5 Implementierung des Verfahrens und einer Vorrichtung zur Durchführung des Verfahrens*

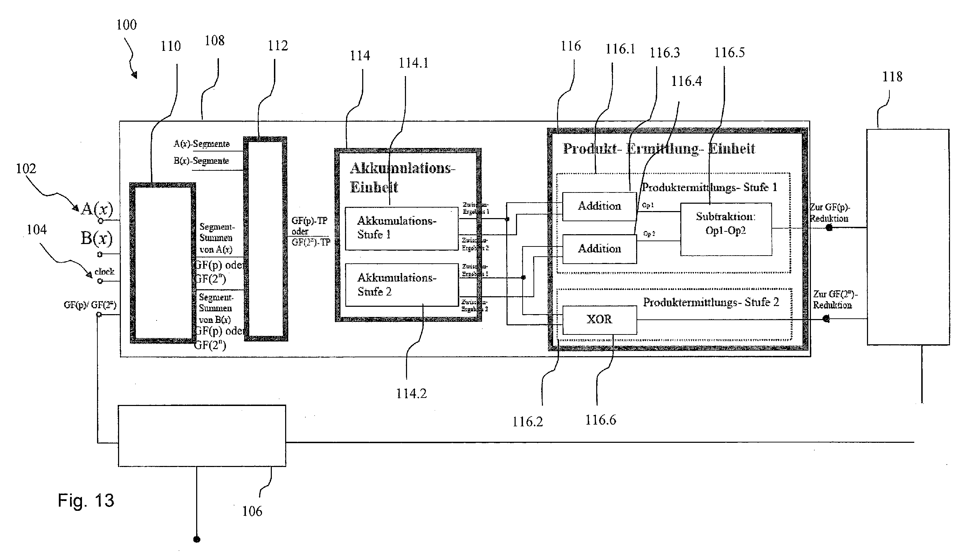

Fig. 13 zeigt in einem vereinfachten Blockdiagramm die Struktur eines Ausführungsbeispiels einer Vorrichtung 100 zur Durchführung des Verfahrens zur wahlweisen Ermittlung des Produktes $C=A \cdot B$ als Produkt im Galois-Körper GF(p) oder als Produkt im Galois-Körper GF($2^n$). Fig. 13 repräsentiert zugleich den schematischen Ablauf eines entsprechenden Verfahrens. Die Vorrichtung 100 ist beispielsweise Teil einer hier ansonsten nicht näher dargestellten Kryptographieeinheit für die elliptische Kurven-Kryptographie, die Bitfolgen wahlweise im GF(p) oder GF($2^n$) verschlüsselt und/oder entschlüsselt. Derartige Kryptographievorrichtungen finden elektronischen Kommunikationsgeräten aller Art Verwendung.

Die Vorrichtung 100 weist Eingänge 102 für die zu multiplizierenden Polynome bzw. Bitfolgen A(x) und B(x) auf. Einem Takteingang 104 wird von einer internen oder externen, hier nicht dargestellten Takterzeugungseinheit der Kryptographievorrichtung ein Taktsignal zugeführt, das den Arbeitstakt der verschiedenen nachfolgend beschriebenen Einheiten der Vorrichtung 100 steuert.

Die Darstellung der Fig. 13 ist auch insoweit vereinfacht, als eine interne Signalführung nicht vollständig ausgeführt ist. Es versteht sich aber, dass beispielsweise das Taktsignal allen Einheiten der Vorrichtung 100 zugeführt ist.

Ein auch als unifizierter Multiplizierer-Kern bezeichneter ASIC 108 enthält in einer bevorzugten Ausführungsform eingangsseitig eine Segmentsummen-Stufe 110, eine ihr nachgeschaltete Teilprodukt-Stufe 112, eine dieser nachgeschaltete Akkumulationseinheit 114 und ausgangsseitig eine Produktermittlungs-Einheit 116. Dieser ist eine Reduktionseinheit 118 nachgeschaltet, die im vorliegenden Beispiel nicht Teil des ASIC 108 ist, selbstverständlich aber zur weiteren Beschleunigung auch ebenfalls als Teil des ASIC 108 realisiert werden kann.

Eine Steuereinheit 106 dient zur Vorgabe durch ein Steuersignal, ob die Vorrichtung wahlweise entweder das Produkt im Galois-Körper GF($2^n$) oder das Produkt im Galois-Körper GF(p) berechnet und ausgibt.

Die Steuereinheit und die Steuerung durch ein Steuersignal sind optional. Die Steuereinheit kann extern zur vorliegenden Vorrichtung, beispielsweise in der Kryptographievorrichtung, aber auch außerhalb dieser angeordnet sein. Es kann alternativ auch auf eine aktive Steuerung im Betrieb verzichtet werden, indem durch eine einmalige, herstellerseitige Einstellung vorgegeben wird, in welchem Galois-Körper die Vorrichtung das Produkt ermittelt.

Die Beschreibung der Funktionsweise der Vorrichtung wird nachfolgend genutzt, zugleich ein Beispiel einer Verfahrensführung zu erläutern. Zunächst werden die zu den multiplizierenden Bitfolgen A und B der Segmentsummen-Stufe 110 zugeführt. Die Segmentsummen-Stufe kann Summen von Segmenten der jeweils selben Bitfolge A bzw. B im Galois-Körper GF(p) und im Galois-Körper GF($2^n$) berechnen, in dem Sinne, dass sie wahlweise Summen von Segmenten der jeweils selben Bitfolge A bzw. B im Galois-Körper GF(p) oder im Galois-Körper GF($2^n$) ermittelt und ausgibt. Sie berechnet damit Teile von Termen, die in der Tabellendarstellung beispielsweise in Fig. 8 enthalten sind, beispielsweise also $(a_0+ a_2)$, $(b_0+ b_2)$, $(a_1+ a_3)$, *etc*. Die zugeführten Bitstellen werden nach einem entsprechend vordefinierten Plan addiert, sodass am Ausgang der Segmentsummen-Stufe 110 die zur Produktermittlung gemäß Akkumulationsplan, beispielsweise nach Fig. 8, benötigten Segmentsummen von A(x) und von B(x) vorliegen.

Im Falle der Segmentsummen-Ermittlung im Galois-Körper GF($2^n$) sind diese Segmentsummen genauso lang wie die eingangsseitig angelegten Bitfolgen, deren Länge mit m Bit sei. Die ausgegebenen Segmentsummen im Galois-Körper GF(p) können ein Bit länger, also m+1 Bit lang sein als die eingegeben Werte, weil hier der Übertrag bei der Addition zu berücksichtigen ist.

Die Segmentsummen im Galois-Körper GF($2^n$) werden bei der vorliegenden Ausführungsform nicht in einer eigenen Addition ermittelt. Vielmehr wird durch Bildung eines Segmentsummen-Zwischenergebnisses bei der Ermittlung der jeweiligen Teilsumme im Galois-Körper GF(p) zunächst ein bei einer jeweiligen Bitstelle eventuell anfallendes Übertragsbit in einem hierfür vorgesehenen Register zwischengespeichert, während das Segmentsummen-Zwischenergebnis in einem anderen Register zwischengespeichert wird. Das Segmentsummen-Zwischenergebnis bildet zugleich die jeweils zu ermittelnde Teilsumme im Galois-Körper GF($2^n$). Daher kann eine separate Addition für GF($2^n$) eingespart werden.

Die Steuerungs-Einheit kann auch ausgebildet sein, im Fall der GF($2^n$) -Multiplikation die Berechnung und Speicherung der Übertragsbits zu unterbinden. Das spart zusätzlich Energie.

In der nachfolgenden Teilproduktermittlung-Stufe 112 werden unter Heranziehung der Eingabewerte A(x) und B(x) sowie der in der Segmentsummen-Stufe 110 ermittelten Segmentsummen Teilprodukte ermittelt, wie sie beispielsweise in der Tabelle der Figur 8 mit $p_i$, i = 1, 2, 3, ... 9, bezeichnet sind.

Dabei werden Teil-Produkte von Segmenten der Faktoren und Teil-Produkte von Segmentsummen ermittelt und ausgegeben. Die ermittelte Segment-Produkte $P_i = A_i B_i$ sind im Galois-Körper GF(p) 2m und im Galois-Körper GF($2^n$) 2m-1 Bit lang. Die ermittelten Teil-Produkte, die aus der Segmentsummen berechnet sind, sind im Galois-Körper GF(p) 2(m+1) Bit lang, während sie im Galois-Körper GF($2^n$) jeweils 2m-1 Bit lang sind.

Die ermittelten Teil-Produkte werden anschließend in der Akkumulationseinheit 114 akkumuliert. Die Akkumulation folgt dem oben anhand der Fig. 8 exemplarisch erläuterten Muster, nämlich in zwei Akkumulationsstufen 114.1 und 114.2. Dabei liefert jede der Akkumulationsstufen sowohl ein erstes Zwischenergebnis, nämlich das Akkumulationsergebnis im Galois-Körper GF($2^n$), als auch ein zweites Zwischenergebnis, nämlich die Übertragsbits zur Ermittlung des Akkumulationsergebnisses im Galois-Körper GF(p).

Die Ermittlung des (zunächst noch nicht reduzierten) Produkts anhand der aus dem jeweiligen Akkumulationsstufen 114.1 und 114.2 stammenden Zwischenergebnisse erfolgt für den Galois-Körper GF(p) in einer ersten Produktermittlungs-Stufe 116.1 und für den Galois-Körper GF($2^n$) in einer zweiten Produktermittlungs-Stufe 116.2.

Die erste Produktermittlungs-Stufe 116.1 hat zwei Addierer 116.3 und 116.4. Der erste Addierer 116.3 dient zur Summierung der in der Akkumulation zu addierenden Terme, die die erste Akkumulationsstufe 114.1 ermittelt hat (Zwischenergebnis 1), und der von dieser Akkumulationsstufe ausgegebenen Übertragsbits (Zwischenergebnis 2). Der zweite Addierer dient zur Summierung der in der Akkumulation zu subtrahierenden Terme, die die zweite Akkumulationsstufe 114.2 ermittelt hat (Zwischenergebnis 1), und der von dieser Akkumulationsstufe ausgegebenen Übertragsbits (Zwischenergebnis 2). Die so ermittelten Summen Op1 und Op2 im GF(p) werden anschließend in einer Differenzstufe 116.5 von einander subtrahiert. Das in der ersten Produktermittlungs-Stufe 116.1 ermittelte Produkt im GF(p) wird dann an die Reduktionseinheit 118 ausgegeben.

Es ist für die Realisierung der ersten Produktermittlungs-Stufe alternativ möglich, den Ausgabewert des Addierers 116.4 einer Einrichtung zur Ermittlung eines Zweierkomplements zuzuführen. Das Zweierkomplement einer Zahl wird durch bitweise Invertierung und anschließende Addition von 1 ermittelt. Das Ergebnis dieser einfachen Operationen kann dann als Summand einer nachfolgenden Addiererstufe zugeführt werden. Auf diese Weise kann die Subtraktion im GF(p) also durch eine Folge einfacher Operationen vermieden werden, so dass bei einer Implementierung in einem Hardwarebeschleuniger auf die Verwendung der Differenzstufe 116.5 verzichtet und statt dessen ein Addierer verwendet werden kann. Das vereinfacht das Schaltungsdesign. Diese Variante ist jedoch hier nicht dargestellt.

Die zweite Produktermittlungs-Stufe 116.2, der nur die ersten Zwischenergebnisse (Summen ohne Übertragsbits) der ersten und zweiten Akkumulationsstufen 114.1 und 114.2 zugeführt werden, enthält zur Ermittlung des Produkts nur XOR-Gatter 116.6. Für den Fall Fig.8 werden 5(2m-1) XOR-Gatter benötigt. Das in der zweiten Produktermittlungs-Stufe 116.2 ermittelte Polynom-Produkt im GF($2^n$) wird dann an die Reduktionseinheit 118 ausgegeben.

Die Reduktionseinheit 118 ermittelt zu dem jeweils zugeführten Produkt ein reduziertes Produkt im jeweiligen Galois-Körper GF($2^n$) bzw. GF(p). In Fig. 13 nicht näher ausgeführten Reduktionsstufen sorgen nach bekannten Algorithmen für eine Länge der Bitfolge des ermittelten Produktes C, welche der Länge der multiplizierten Faktoren (Bitfolgen) A und B entspricht.

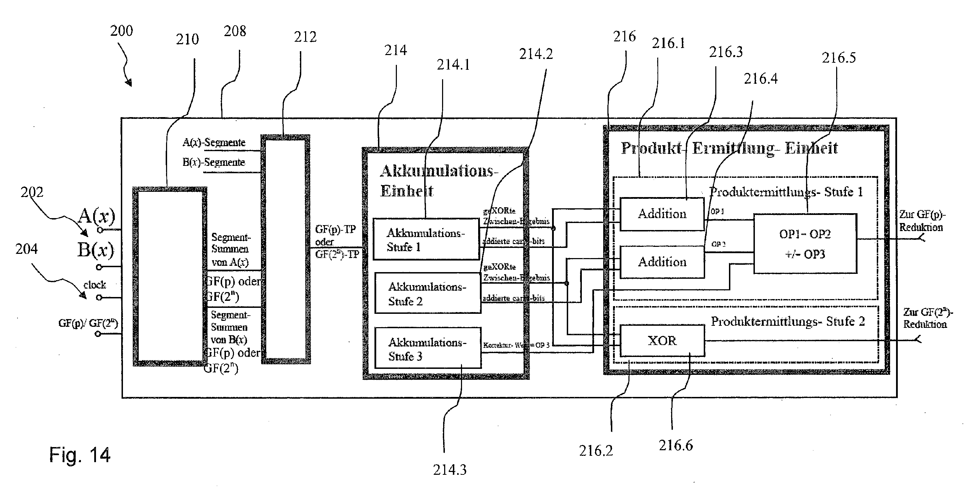

Fig. 14 zeigt in einem vereinfachten Blockdiagramm die Struktur eines zweiten Ausführungsbeispiels einer Vorrichtung 200 zur Durchführung des Verfahrens zur wahlweisen Ermittlung des Produktes $C = A \cdot B$ als Produkt im Galois-Körper GF(p) oder als Produkt im Galois-Körper GF($2^n$). Die Vorrichtung 200 entspricht weitgehend der Vorrichtung 100. Daher werden zur Kennzeichnung der einzelnen Elemente der Vorrichtung in Fig. 14 Bezugszeichen verwendet, die denen der entsprechenden Elemente der Vorrichtung der Fig. 13 mit Ausnahme der ersten Ziffer gleichen. Die erste Ziffer ist im vorliegenden Ausführungsbeispiel eine 2 anstelle der 1 gleichen.

Fig. 14 ist gegenüber Fig. 13 zusätzlich vereinfacht, indem die Steuereinheit 106 und die und die Reduktionseinheit 118 in der Darstellung fehlen. Fig. 14 zeigt also nur den ASIC 208, der dem ASIC 108 der Fig. 13 entspricht. Die genannten, in der Fig. 14 nicht dargestellten Einheiten können tatsächlich jedoch selbstverständlich wie im Beispiel der Fig. 13 vorgesehen und verschaltet sein.

Für die Verschaltung und Funktionsweise Elemente der Vorrichtung 200 gilt im übrigen mit Ausnahme der nachfolgend erläuterten Unterschiede dasselbe wie für die entsprechenden Elemente der Vorrichtung 100.

Die Unterschiede der Vorrichtung 200 gegenüber der Vorrichtung 100 liegen in der Akkumulations-Einheit 214 und in der Produktermittlungs-Einheit 216. Die Vorrichtung 200 implementiert in ihrer Akkumulations-Einheit 214 eine Akkumulationsvorschrift, welche für die Ermittlung des Produktes im GF(p) drei Akkumulations-Stufen 214.1 bis 214.3 vorsieht, beispielsweise die Akkumulationsvorschrift der Fig. 11. Die in der Beschreibung der Akkumulationsvorschrift der Fig. 11 erwähnten und in der Tabelle der Fig. 11 im Einzelnen benannten Korrekturterme werden in der dritten Akkumulations-Stufe 214.3 ermittelt und der nachgeschalteten Produktermittlungs-Einheit 216 zur Verfügung gestellt. Da im Beispiel der Fig. 11 die Terme der dritten Akkumulations-Stufe mit negativem Vorzeichen zu berücksichtigen sind, werden sie in der dritten Akkumulations-Stufe 214.3 zunächst addiert und dann in der Differenzstufe 216.5 zusätzlich vom Ergebnis der ersten Akkumulations-Stufe 214.1 subtrahiert, es wird also Op1-Op2-Op3 berechnet. Auch hier gilt, dass die mathematische Subtraktion in der Produktermittlungs-Einheit 216 auf unterschiedliche Weise implementiert werden kann, wie im Zusammenhang mit Fig. 13 beschrieben.

Je nach Akkumulationsvorschrift kann jedoch an dieser Stelle auch eine Addition des Ergebnisses der dritten Akkumulations-Stufe 214.3 vorgesehen sein.

Für die Ermittlung des Produktes im GF($2^n$) ist die dritte Akkumulationsstufe 214.3 ohne Bedeutung.

**Patentansprüche**

1.  Vorrichtung

    - zur Ermittlung eines Produktes C zweier in Form endlicher Bitfolgen $A = a_{n-1}a_{n-2}...a_1a_0$ und $B = b_{n-1}b_{n-2}...b_1b_0$ vorliegender Faktoren als Produkt wahlweise im Galois-Körper GF(p) oder als Produkt im Galois-Körper GF($2^n$), umfassend

    **a) eine Segmentsummen-Stufe,**
    die ausgebildet ist, die Bitfolgen A und B in Segmente zu zerlegen und nach einem vordefinierten Summationsplan Segmentsummen von vorbestimmten Segmenten der jeweils selben Bitfolge wahlweise im Galois-Körper GF(p) oder im Galois-Körper GF ($2^n$) zu ermitteln und auszugeben;

    - dabei die jeweilige Segmentsumme im Galois-Körper GF(p) durch Bildung eines Segmentsummen-Zwischenergebnisses mittels Addition der betreffenden Bitwerte sowie Ermitteln und Anfügen eines nächsthöherwertigen Übertragsbits an das Segmentsummen-Zwischenergebnis zu ermitteln
    - und das Segmentsummen-Zwischenergebnis als die jeweilige Segmentsumme im Galois-Körper GF($2^n$) auszugeben;

    **b) eine Teilprodukt-Stufe,**
    die ausgebildet ist, Teilprodukte von Segmenten der Bitfolgen A und B und Teilprodukte von Segmentsummen, die die Segmentsummen-Stufe ausgibt, wahlweise im Galois-Körper GF(p) oder im Galois-Körper GF ($2^n$) zu ermitteln und auszugeben;

    **c) eine Akkumulations-Einheit,**
    die ausgebildet ist, anhand der Segmentsummen und der Teilprodukte

    - in einer ersten Akkumulations-Stufe

        - als erste Akkumulations-Zwischenergebnisse Ergebnisse von XOR-Verknüpfungen im Galois-Körper GF(p) zu addierender, also mit positivem Vorzeichen versehener und nach einem ersten Teil einer vordefinierten Akkumulationsvorschrift zu akkumulierender Teilprodukte zu ermitteln und auszugeben, und
        - als zweite Akkumulations-Zwischenergebnisse bei einer Addition der nach dem ersten Teil der vordefinierten Akkumulationsvorschrift jeweils zu akkumulierenden Teilprodukte zusätzlich zu den ersten Akkumulations-Zwischenergebnissen anfallende Übertragsbits zu ermitteln und auszugeben;

    - in einer zweiten Akkumulations-Stufe

        - als dritte Akkumulations-Zwischenergebnisse Ergebnisse von XOR-Verknüpfungen im Galois-Körper GF(p) zu subtrahierender, also mit negativem Vorzeichen versehener und nach einem zweiten Teil der vordefinierten Akkumulationsvorschrift zu akkumulierender Teilprodukte zu ermitteln und auszugeben, und
        - als vierte Akkumulations-Zwischenergebnisse bei einer Addition der nach dem zweiten Teil der vordefinierten Akkumulationsvorschrift jeweils zu akkumulierenden Teilprodukte zusätzlich zu den zweiten Akkumulations-Zwischenergebnissen anfallende Übertragsbits zu ermitteln und auszugeben;

    **d) eine Produktermittlungs-Einheit,** mit

- einer ersten Produktermittlungs-Stufe, die ausgebildet ist,
die ersten und zweiten Akkumulations-Zwischenergebnisse nach der Akkumulationsvorschrift im Galois-Körper GF(p) zur Bildung eines ersten Produkt-Zwischenergebnisses zu addieren;
die dritten und vierten Akkumulations-Zwischenergebnisse nach der Akkumulationsvorschrift im Galois-Körper GF(p) zur Bildung eines zweiten Produkt-Zwischenergebnisses zu addieren; und
- zur Ermittlung des Produktes C im Galois-Körper GF(p) das zweite vom ersten Produkt-Zwischenergebnis zu subtrahieren und als zu reduzierendes Produkt C im Galois-Körper GF(p) auszugeben; sowie mit
einer zweiten Produktermittlungs-Stufe, die ausgebildet ist,
ein Ergebnis einer XOR-Verknüpfung des ersten und des dritten Akkumulations-Zwischenergebnisse zu ermitteln und als zu reduzierendes Produkt C im Galois-Körper GF($2^n$) auszugeben.

2. Vorrichtung nach Anspruch 1, bei der

- die Akkumulationseinheit zusätzlich ausgebildet ist, die Akkumulation nach der Akkumulationsvorschrift in der ersten oder der zweiten Akkumulations-Stufe zumindest teilweise iterativ durchzuführen, indem einige der ersten oder dritten Akkumulations-Zwischenergebnisse als Operand bei der Ermittlung weiterer erster bzw. dritter Akkumulations-Zwischenergebnisse verwendet werden,
- bei der die Akkumulationseinheit zusätzlich eine dritte Akkumulations-Stufe aufweist, welche ausgebildet ist, als Korrektur-Zwischenergebnisse Werte von Korrekturtermen im Galois-Körper GF(p) zu ermitteln und auszugeben, wobei die Korrekturterme Akkumulationsfehler der ersten oder zweiten Akkumulationsstufe im Galois-Körper GF(p) korrigieren, welche die iterative Durchführung der Akkumulation nach dem ersten oder zweiten Teil der Akkumulationsvorschrift einführt, und bei der
- die erste Produktermittlungs-Stufe der Produktermittlungs-Einheit zusätzlich ausgebildet ist, unter Verwendung aller Akkumulations-Zwischenergebnisse das zu reduzierende Produkt C im Galois-Körper GF(p) zu ermitteln und auszugeben.

3. Vorrichtung nach einem der vorstehenden Ansprüche, mit einer der Produktermittlungs-Einheit nachgeschalteten Reduktionseinheit, die ausgebildet ist, eine von der ersten oder der zweiten Produktermittlungs-Stufe ausgebebene Bitfolge in eine kürzere Bitfolge zu reduzieren, welche der ausgegebenen Bitfolge im betreffenden Galois-Körper GF(p) bzw. GF($2^n$) äquivalent ist.

4. Vorrichtung nach einem der vorstehenden Ansprüche, mit einer Steuereinheit, die mit der Segmentsummenstufe, der Teilprodukt-Stufe, der AkkumulationsEinheit und der Produktermittlungs-Einheit verbunden ist, und die ausgebildet ist, in Abhängigkeit von einem eingangsseitig anliegenden Auswahlsignal die Teilsegmentstufe, die Teilprodukt-Stufe, die Akkumulations-Einheit und die Produktermittlungs-Einheit entweder zur Ermittlung und Ausgabe des Produktes C als Produkt im Galois-Körper GF(p) oder zur Ermittlung und Ausgabe des Produktes C als Produkt im Galois-Körper GF($2^n$) anzusteuern.

5. Vorrichtung nach einem der vorstehenden Ansprüche, bei der zumindest die Segmentsummen-Stufe, die Teilprodukt-Stufe, die Akkumulations-Einheit und die Produktermittlungs-Stufe als ASIC realisiert sind.

6. Vorrichtung nach einem der vorstehenden Ansprüche, bei der die Akkumulations-Einheit ausgebildet ist, eine Akkumulationsvorschrift zu verwenden, welche bestimmte Teilprodukte des Produktes C unter Anwendung der ursprünglichen oder der generalisierten Karatsuba-Formel ermittelt.

7. Kryptographievorrichtung, umfassend eine Vorrichtung nach einem der Ansprüche 1 bis 6, insbesondere in Form von Hardware.

8. Sendevorrichtung, Empfangsvorrichtung oder Sende-Empfangsvorrichtung, umfassend eine Kryptographievorrichtung nach Anspruch 7.

9. Verfahren

- zur Ermittlung eines Produktes C zweier in Form endlicher Bitfolgen $A = a_{n-1}a_{n-2}...a_1a_0$ und $B = b_{n-1}b_{n-2}...b_1b_0$ vorliegender Faktoren wahlweise als Produkt im Galois-Körper GF(p) oder als Produkt im Galois-Körper GF($2^n$), umfassend

**a) eine Segmentsummen-Stufe,**

in der die Bitfolgen A und B in Segmente zerlegt und in der nach einem vordefinierten Summationsplan Segmentsummen von vorbestimmten Segmenten der jeweils selben Bitfolge wahlweise im Galois-Körper GF(p) oder im Galois-Körper GF $(2^n)$ ermittelt und ausgegeben werden;

- dabei die jeweilige Segmentsumme im Galois-Körper GF(p) durch Bildung eines Segmentsummen-Zwischenergebnisses mittels Addition der betreffenden Bitwerte sowie Ermitteln und Anfügen eines nächsthöherwertigen Übertragsbits an das Segmentsummen-Zwischenergebnis ermittelt werden
- und das Segmentsummen-Zwischenergebnis als die jeweilige Segmentsumme im Galois-Körper GF $(2^n)$ ausgegeben wird;

**b) eine Teilprodukt-Stufe,**

in der Teilprodukte von Segmenten der Bitfolgen A und B und Teilprodukte von Segmentsummen, die die Segmentsummen-Stufe ausgibt, wahlweise im Galois-Körper GF(p) oder im Galois-Körper GF $(2^n)$ ermittelt und ausgegeben werden;

**c) eine Akkumulation,**

bei der anhand der Segmentsummen und der Teilprodukte

- in einer ersten Akkumulations-Stufe

- als erste Akkumulations-Zwischenergebnisse Ergebnisse von XOR-Verknüpfungen im Galois-Körper GF(p) zu addierender, also mit positivem Vorzeichen versehener und nach einem ersten Teil einer vordefinierten Akkumulationsvorschrift zu akkumulierender Teilprodukte ermittelt und ausgegeben werden, und
- als zweite Akkumulations-Zwischenergebnisse bei einer Addition der nach dem ersten Teil der vordefinierten Akkumulationsvorschrift jeweils zu akkumulierenden Teilprodukte zusätzlich zu den ersten Akkumulations-Zwischenergebnissen anfallende Übertragsbits ermittelt und ausgegeben werden;

- in einer zweiten Akkumulations-Stufe

- als dritte Akkumulations-Zwischenergebnisse Ergebnisse von XOR-Verknüpfungen im Galois-Körper GF(p) zu subtrahierender, also mit negativem Vorzeichen versehener und nach einem zweiten Teil der vordefinierten Akkumulationsvorschrift zu akkumulierender Teilprodukte ermittelt und ausgegeben werden, und
- als vierte Akkumulations-Zwischenergebnisse bei einer Addition der nach dem zweiten Teil der vordefinierten Akkumulationsvorschrift jeweils zu akkumulierenden Teilprodukte zusätzlich zu den zweiten Akkumulations-Zwischenergebnissen anfallende Übertragsbits ermittelt und ausgegeben werden;

**d) eine Produktermittlung, bei der**

- in einer ersten Produktermittlungs-Stufe

die ersten und zweiten Akkumulations-Zwischenergebnisse nach der Akkumulationsvorschrift im Galois-Körper GF(p) zur Bildung eines ersten Produkt-Zwischenergebnisses addiert werden;
die dritten und vierten Akkumulations-Zwischenergebnisse nach der Akkumulationsvorschrift im Galois-Körper GF(p) zur Bildung eines zweiten Produkt-Zwischenergebnisses addiert werden; und
- zur Ermittlung des Produktes C im Galois-Körper GF(p) das zweite vom ersten Produkt-Zwischenergebnis subtrahiert wird und als zu reduzierendes Produkt C im Galois-Körper GF(p) ausgegeben wird; sowie
- in einer zweiten Produktermittlungs-Stufe

ein Ergebnis einer XOR-Verknüpfung des ersten und des dritten Akkumulations-Zwischenergebnisse ermittelt und als zu reduzierendes Produkt C im Galois-Körper GF $(2^n)$ ausgegeben wird.

**10.** Verfahren nach Anspruch 9, bei dem

- die Akkumulation nach der Akkumulationsvorschrift in der ersten oder der zweiten Akkumulations-Stufe zumindest teilweise iterativ durchgeführt wird, indem einige der ersten oder dritten Akkumulations-Zwischenergebnisse als Operand bei der Ermittlung weiterer erster bzw. dritter Akkumulations-Zwischenergebnisse verwendet werden,

- bei der die Akkumulation zusätzlich eine dritte Akkumulations-Stufe aufweist, welche als Korrektur-Zwischenergebnisse Werte von Korrekturtermen im Galois-Körper GF(p) ermittelt und ausgibt, wobei die Korrekturterme Akkumulationsfehler der ersten oder zweiten Akkumulationsstufe im Galois-Körper GF(p) korrigieren, welche die iterative Durchführung der Akkumulation nach dem ersten oder zweiten Teil der Akkumulationsvorschrift einführt, und bei der

- die erste Produktermittlungs-Stufe der Produktermittlung zusätzlich unter Verwendung aller Akkumulations-Zwischenergebnisse das zu reduzierende Produkt C im Galois-Körper GF(p) ermittelt und ausgibt.

11. Verfahren nach einem der Ansprüche 9 oder 10, bei dem eine von der ersten oder der zweiten Produktermittlungs-Stufe ausgebebene Bitfolge in eine kürzere Bitfolge reduziert wird, welche der ausgegebenen Bitfolge im betreffenden Galois-Körper GF(p) bzw. GF ($2^n$) äquivalent ist.

12. Verfahren nach einem der Ansprüche 9 bis 11, bei dem in Abhängigkeit von einem eingangsseitig anliegenden Auswahlsignal entweder die Ermittlung und Ausgabe des Produktes C als Produkt im Galois-Körper GF(p) oder die Ermittlung und Ausgabe des Produktes C als Produkt im Galois-Körper GF($2^n$) durchgeführt wird.

13. Kryptographieverfahren zur Verwendung in einer elektronischen Kryptographievorrichtung, umfassend ein Verfahren nach einem der Ansprüche 9 bis 12.

**Claims**

1. Device

- for determining a product C of two factors occurring in the form of finite bit *sequences A = $a_{n-1}a_{n-2}...a_1a_0$* and *B = $b_{n-1}b_{n-2}...b_1b_0$* as product in the finite field (Galois field) GF(p) or as product in the finite field (Galois field) GF($2^n$), as desired,
comprising

**a) a segment totalling stage**
which is configured to break down the bit sequences A and B into segments and, in accordance with a predefined summation plan, to determine and output segment totals of predetermined segments of the same respective bit sequence in the finite field GF(p) or in the finite field GF($2^n$), as desired;

- at the same time determining the respective segment total in the finite field GF(p) by forming an intermediate segment totalling result by addition of the relevant bit values and by determining and attaching a carry bit of the next highest value to the intermediate segment totalling result
- and outputting the intermediate segment totalling result as the respective segment total in the finite field GF($2^n$);

**b) a partial product stage**
which is configured to determine and output partial products of segments of the bit sequences A and B and partial products of segment totals which are output in the segment totalling stage, in the finite field GF(p) or in the finite field GF($2^n$), as desired;

**c) an accumulating unit**
which is configured, by means of the segment totals and the partial products,

- in a first accumulation stage

o to determine and output, as first intermediate accumulation results, results of XOR links in the finite field GF(p) of partial products which are to be added, i.e. which are provided with positive signs and are to be accumulated in accordance with a first part of a predefined accumulation protocol, and

o to determine and output, as second intermediate accumulation results, during the addition of the partial products which are to be accumulated in accordance with the first part of the predefined accumulation protocol, carry bits occurring in addition to the first intermediate accumulation results;

- in a second accumulation stage

o to determine and output, as third intermediate accumulation results, results of XOR links in the finite field GF(p) of partial products which are to be subtracted, i.e. which are provided with negative signs and are to be accumulated in accordance with a second part of the predefined accumulation protocol, and
o to determine and output, as fourth intermediate accumulation results, during the addition of the partial products which are to be accumulated in accordance with the second part of the predefined accumulation protocol, carry bits occurring in addition to the second intermediate accumulation results;

**d) a product determining unit,** having

- a first product determining stage, which is configured

o to add the first and second intermediate accumulation results according to the accumulation protocol in the finite field GF(p) in order to form a first intermediate product result;
o to add the third and fourth intermediate accumulation results according to the accumulation protocol in the finite field GF(p) in order to form a second intermediate product result; and

- in order to determine the product C in the finite field GF(p), to subtract the second intermediate product result from the first intermediate product result and to output it as the product C which is to be reduced in the finite field GF(p); and having
- a second product determining stage, which is configured

o to determine a result of an XOR link of the first and third intermediate accumulation results and to output it as the product C which is to be reduced in the finite field $GF(2^n)$.

2. Device according to claim 1, wherein

- the accumulation unit is additionally configured to carry out the accumulation in accordance with the accumulation protocol in the first or second accumulation stage at least partially iteratively, using some of the first or third intermediate accumulation results as operand when determining further first or third intermediate accumulation results,
- wherein the accumulation unit additionally comprises a third accumulation stage which is configured to determine and output, as intermediate correction results, values of correction terms in the finite field GF(p), the correction terms correcting accumulation errors of the first or second accumulation stage in the finite field GF(p) which introduces the iterative performance of the accumulation according to the first or second part of the accumulation protocol, and wherein
- the first product determining stage of the product determining unit is additionally configured to determine and output the product C which is to be reduced in the finite field GF(p), using all the intermediate accumulation results.

3. Device according to one of the preceding claims, having a reduction unit connected downstream of the product determining unit, said reduction unit being configured to reduce a bit sequence output by the first or second product determining stage into a shorter bit sequence which is equivalent to the output bit sequence in the respective finite field GF(p) or $GF(2^n)$.

4. Device according to one of the preceding claims, having a control unit which is connected to the segment totalling stage, the partial product stage, the accumulation unit and the product determining unit, and which is configured, dependent on a selection signal present at an input, to activate the partial segment stage, the partial product stage, the accumulation unit and the product determining unit, either in order to determine and output the product C as product in the finite field GF(p) or to determine and output the product C as product in the finite field $GF(2^n)$.

5. Device according to one of the preceding claims, wherein at least the segment totalling stage, the partial product stage, the accumulation unit and the product determining unit are embodied as ASIC.

6. Device according to one of the preceding claims, wherein the accumulation unit is configured to use an accumulation protocol which determines certain partial products of product C using the original or the generalised Karatsuba formula.

7. Cryptographic device comprising a device according to one of claims 1 to 6, particularly in the form of hardware.

8. Transmitter, receiver or transceiver, comprising a cryptographic device according to claim 7.

9. Method

- for determining a product C of two factors occurring in the form of finite bit *sequences A* = $a_{n-1}a_{n-2}...a_1a_0$ and $B = b_{n-1}b_{n-2}...b_1b_0$ as product in the finite field (Galois field) GF(p) or as product in the finite field (Galois field) GF($2^n$), as desired,
comprising

**a) a segment totalling stage**
wherein the bit sequences A and B are broken down into segments and wherein, in accordance with a predefined summation plan, segment totals of predetermined segments of the same respective bit sequence in the finite field GF(p) or in the finite field GF($2^n$), as desired, are determined and output;

- at the same time the respective segment total in the finite field GF(p) is determined by forming an intermediate segment totalling result by addition of the relevant bit values and by determining and attaching a carry bit of the next highest value to the intermediate segment totalling result
- and the intermediate segment totalling result is output as the respective segment total in the finite field GF($2^n$);

**b) a partial product stage**
wherein partial products of segments of the bit sequences A and B and partial products of segment totals which are output by the segment totalling stage, in the finite field GF(p) or in the finite field GF($2^n$), as desired, are determined and output;
**c) an accumulation**
in which, by means of the segment totals and the partial products,

- in a first accumulation stage

o results of XOR links in the finite field GF(p) of partial products which are to be added, i.e. which are provided with positive signs and are to be accumulated in accordance with a first part of a predefined accumulation protocol, are determined and output, as first intermediate accumulation results, and
o during the addition of the partial products which are to be accumulated in accordance with the first part of the predefined accumulation protocol, carry bits occurring in addition to the first intermediate accumulation results are determined and output, as second intermediate accumulation results;

- in a second accumulation stage

o results of XOR links in the finite field GF(p) of partial products which are to be subtracted, i.e. which are provided with negative signs and are to be accumulated in accordance with a second part of the predefined accumulation protocol, are determined and output, as third intermediate accumulation results, and
o during the addition of the partial products which are to be accumulated in accordance with the second part of the predefined accumulation protocol, carry bits occurring in addition to the second intermediate accumulation results are determined and output, as fourth intermediate accumulation results;

**d) a product determination,** wherein

- in a first product determining stage,

o the first and second intermediate accumulation results are added according to the accumulation protocol in the finite field GF(p) in order to form a first intermediate product result;

o the third and fourth intermediate accumulation results are added according to the accumulation protocol in the finite field GF(p) in order to form a second intermediate product result; and

- in order to determine the product C in the finite field GF(p), the second intermediate product result is subtracted from the first intermediate product result and is output as the product C which is to be reduced in the finite field GF(p); and
- in a second product determining stage,

o a result of an XOR link of the first and third intermediate accumulation results is determined and is output as the product C which is to be reduced in the finite field $GF(2^n)$.

10. Method according to claim 9, wherein

- the accumulation in accordance with the accumulation protocol in the first or second accumulation stage is carried out at least partially iteratively, using some of the first or third intermediate accumulation results as operand when determining further first or third intermediate accumulation results,
- wherein the accumulation additionally comprises a third accumulation stage which determines and outputs, as intermediate correction results, values of correction terms in the finite field GF(p), the correction terms correcting accumulation errors of the first or second accumulation stage in the finite field GF(p) which introduces the iterative performance of the accumulation according to the first or second part of the accumulation protocol, and wherein
- the first product determining stage of the product determination additionally determines and outputs the product C which is to be reduced in the finite field GF(p), using all the intermediate accumulation results.

11. Method according to one of claims 9 or 10, wherein a bit sequence output by the first or second product determining stage is reduced into a shorter bit sequence which is equivalent to the output bit sequence in the respective finite field GF(p) or $GF(2^n)$.

12. Method according to one of claims 9 to 11, wherein, dependent on a selection signal present at an input, either the determination and outputting of the product C as product in the finite field GF(p) is carried out or the determination and outputting of the product C as product in the finite field $GF(2^n)$ is carried out.

13. Cryptographic method for use in an electronic cryptographic device, comprising a method according to one of claims 9 to 12.

**Revendications**

1. Dispositif

- destiné à calculer un produit C de deux facteurs se présentant sous la forme de suites de bits finies A= $a_{n-1}a_{n-2}...a_1a_0$ et B = $b_{n-1}b_{n-2}...b_1b_0$ au choix en tant que produit dans le corps de Galois GF(p) ou en tant que produit dans le corps de Galois $GF(2^n)$, comprenant

**a) un étage de sommes de segments,**
qui est conçu pour décomposer les suites de bits A et B en segments et pour calculer et émettre des sommes de segments de segments prédéterminés de la même suite de bits respective au choix dans le corps de Galois GF(p) ou dans le corps de Galois $GF(2^n)$ selon un plan de sommation prédéfini,

- pour calculer dans ce cadre la somme de segments respective dans le corps de Galois GF(p) en formant un résultat intermédiaire de la somme de segments au moyen de l'addition des valeurs de bits concernées ainsi que du calcul et de l'ajout d'un bit de transfert de la valeur plus élevée suivante au résultat intermédiaire de la somme de segments,
- et pour émettre le résultat intermédiaire de la somme de segments en tant que somme de segments respective dans le corps de Galois $GF(2^n)$ ;

23

**b) un étage de produit partiel,**
qui est conçu pour calculer et émettre des produits partiels de segments des suites de bits A et B et des produits partiels de sommes de segments que l'étage de sommes de segments émet, au choix, dans le corps de Galois GF(p) ou dans le corps de Galois GF($2^n$) ;

**c) une unité d'accumulation,**
qui est conçue pour, sur la base des sommes de segments et des produits partiels,

- <u>dans un premier étage d'accumulation</u>

  - calculer et émettre, en tant que premiers résultats intermédiaires de l'accumulation, des résultats de liaisons XOR dans le corps de Galois GF(p) de produits partiels à additionner, c'est-à-dire munis de signes positifs et devant être accumulés selon une première partie d'une instruction d'accumulation prédéfinie, et
  - calculer et émettre, en tant que deuxièmes résultats intermédiaires de l'accumulation, avec une addition des produits partiels devant respectivement être accumulés selon la première partie de l'instruction d'accumulation prédéfinie, des bits de transfert apparaissant en complément aux premiers résultats intermédiaires de l'accumulation ;

- <u>dans un deuxième étage d'accumulation</u>

  - calculer et émettre, en tant que troisièmes résultats intermédiaires de l'accumulation, des résultats de liaisons XOR dans le corps de Galois GF(p) de produits partiels à soustraire, c'est-à-dire munis de signes négatifs et devant être accumulés selon une deuxième partie de l'instruction d'accumulation prédéfinie, et
  - calculer et émettre, en tant que quatrièmes résultats intermédiaires de l'accumulation, avec une addition des produits partiels devant respectivement être accumulés selon la deuxième partie de l'instruction d'accumulation prédéfinie, des bits de transfert apparaissant en complément aux deuxièmes résultats intermédiaires de l'accumulation ;

**d) une unité de calcul de produits** ayant :

- un <u>premier étage de calcul de produits</u>, qui est conçu
pour additionner les premiers et deuxièmes résultats intermédiaires de l'accumulation selon l'instruction d'accumulation dans le corps de Galois GF(p) afin de former un premier résultat intermédiaire de produit ;
pour additionner les troisièmes et quatrièmes résultats intermédiaires de l'accumulation selon l'instruction d'accumulation dans le corps de Galois GF(p) afin de former un deuxième résultat intermédiaire de produit ; et

- afin de calculer le produit C dans le corps de Galois GF(p), pour soustraire le deuxième résultat intermédiaire de produit du premier et l'émettre en tant que produit C à réduire dans le corps de Galois GF(p) ; et ayant également :

- un <u>deuxième étage de calcul de produits</u>, qui est conçu
pour calculer un résultat d'une liaison XOR du premier et du troisième résultats intermédiaires de l'accumulation et l'émettre en tant que produit C à réduire dans le corps de Galois GF($2^n$).

2. Dispositif selon la revendication 1, dans lequel :

- l'unité d'accumulation est en outre conçue pour exécuter l'accumulation selon l'instruction d'accumulation, dans le premier ou le deuxième étage d'accumulation, au moins partiellement par itération en ce que certains des premiers et troisièmes résultats intermédiaires de l'accumulation sont utilisés en tant qu'opérandes respectivement dans le calcul de premiers et troisièmes résultats intermédiaires de l'accumulation supplémentaires,
- l'unité d'accumulation présente en outre un troisième étage d'accumulation, qui est conçu pour calculer et émettre, en tant que résultats intermédiaires de correction, des valeurs de termes de correction dans le corps de Galois GF(p), les termes de correction corrigeant des erreurs d'accumulation du premier ou deuxième étage d'accumulation dans le corps de Galois GF(p) que l'exécution itérative de l'accumulation selon la première ou la deuxième partie de l'instruction d'accumulation introduit, et

- le premier étage de calcul de produits de l'unité de calcul de produits est en outre conçu pour calculer et émettre le produit C à réduire dans le corps de Galois GF(p) en utilisant tous les résultats intermédiaires de l'accumulation.

3. Dispositif selon l'une des revendications précédentes, ayant une unité de réduction montée en aval de l'unité de calcul de produits, qui est conçue pour réduire une suite de bits émise par le premier ou le deuxième étage de calcul de produits en une suite de bits plus courte qui est équivalente à la suite de bits émise dans le corps de Galois GF(p) ou GF($2^n$) concerné.

4. Dispositif selon l'une des revendications précédentes, ayant une unité de commande qui est reliée à l'étage de sommes de segments, à l'étage de produit partiel, à l'unité d'accumulation et à l'unité de calcul de produits et qui est conçue pour commander l'étage de sommes de segments, l'étage de produit partiel, l'unité d'accumulation et l'unité de calcul de produits en fonction d'un signal de sélection appliqué du côté de l'entrée, soit pour calculer et émettre le produit C en tant que produit dans le corps de Galois GF(p), soit pour calculer et émettre le produit C en tant que produit dans le corps de Galois GF($2^n$).

5. Dispositif selon l'une des revendications précédentes, dans lequel au moins l'étage de sommes de segments, l'étage de produit partiel, l'unité d'accumulation et l'unité de calcul de produits sont réalisés en tant que circuits ASIC.

6. Dispositif selon l'une des revendications précédentes, dans lequel l'unité d'accumulation est conçue pour appliquer une instruction d'accumulation qui calcule des produits partiels déterminés du produit C en utilisant la formule de Karatsuba initiale ou généralisée.

7. Dispositif cryptographique comprenant un dispositif selon l'une des revendications 1 à 6, en particulier sous la forme de matériel informatique.

8. Dispositif d'émission, dispositif de réception ou dispositif d'émission-réception comprenant un dispositif cryptographique selon la revendication 7.

9. Procédé

- destiné à calculer un produit C de deux facteurs se présentant sous la forme de suites de bits finies A = $a_{n-1}a_{n-2}...a_1a_0$ et B = $b_{n-1}b_{n-2}...b_1b_0$ au choix en tant que produit dans le corps de Galois GF(p) ou en tant que produit dans le corps de Galois GF($2^n$), comprenant

**a) une étape de sommes de segments,**
dans laquelle les suites de bits A et B sont décomposées en segments et des sommes de segments de segments prédéterminés de la même suite de bits respective sont calculées et émises au choix dans le corps de Galois GF(p) ou dans le corps de Galois GF($2^n$) selon un plan de sommation prédéfini,

- la somme de segments respective étant dans ce cadre calculée dans le corps de Galois GF(p) en formant un résultat intermédiaire de la somme de segments au moyen de l'addition des valeurs de bits concernées ainsi que du calcul et de l'ajout d'un bit de transfert de la valeur plus élevée suivante au résultat intermédiaire de la somme de segments,
- et le résultat intermédiaire de la somme de segments est émis en tant que somme de segments respective dans le corps de Galois GF($2^n$) ;

**b) une étape de produit partiel,**
dans laquelle des produits partiels de segments des suites de bits A et B et des produits partiels de sommes de segments que l'étage de sommes de segments émet sont calculés et émis, au choix, dans le corps de Galois GF(p) ou dans le corps de Galois GF($2^n$) ;
**c) une accumulation,**
dans laquelle, sur la base des sommes de segments et des produits partiels,

- dans une première étape d'accumulation

- des résultats de liaisons XOR dans le corps de Galois GF(p) de produits partiels à additionner, c'est-à-dire munis de signes positifs et devant être accumulés selon une première partie d'une instruction d'accumulation prédéfinie, sont calculés et émis en tant que premiers résultats intermédiaires de l'accumulation et
- des bits de transfert apparaissant en complément aux premiers résultats intermédiaires de l'accumulation sont calculés et émis, avec une addition des produits partiels devant respectivement être accumulés selon la première partie de l'instruction d'accumulation prédéfinie, en tant que deuxièmes résultats intermédiaires de l'accumulation ;

- dans une deuxième étape d'accumulation

- des résultats de liaisons XOR dans le corps de Galois GF(p) de produits partiels à soustraire, c'est-à-dire munis de signes négatifs et devant être accumulés selon une deuxième partie de l'instruction d'accumulation prédéfinie, sont calculés et émis en tant que troisièmes résultats intermédiaires de l'accumulation et
- des bits de transfert apparaissant en complément aux deuxièmes résultats intermédiaires de l'accumulation sont calculés et émis, avec une addition des produits partiels devant respectivement être accumulés selon la deuxième partie de l'instruction d'accumulation prédéfinie, en tant que quatrièmes résultats intermédiaires de l'accumulation ;

**d) un calcul de produits dans lequel :**

- dans une première étape de calcul de produits,
les premiers et deuxièmes résultats intermédiaires de l'accumulation sont additionnés selon l'instruction d'accumulation dans le corps de Galois GF(p) afin de former un premier résultat intermédiaire de produit ;
les troisièmes et quatrièmes résultats intermédiaires de l'accumulation sont additionnés selon l'instruction d'accumulation dans le corps de Galois GF(p) afin de former un deuxième résultat intermédiaire de produit ; et
- afin de calculer le produit C dans le corps de Galois GF(p), le deuxième résultat intermédiaire de produit est soustrait du premier et il est émis en tant que produit C à réduire dans le corps de Galois GF(p) ; et

- dans une deuxième étape de calcul de produits,
un résultat d'une liaison XOR du premier et du troisième résultats intermédiaires de l'accumulation est calculé et émis en tant que produit C à réduire dans le corps de Galois $GF(2^n)$.

10. Procédé selon la revendication 9, dans lequel :

- l'accumulation est exécutée au moins partiellement par itération, selon l'instruction d'accumulation, au cours de la première ou de la deuxième étape de l'accumulation, en ce que certains des premiers et troisièmes résultats intermédiaires de l'accumulation sont utilisés en tant qu'opérandes respectivement dans le calcul de premiers et troisièmes résultats intermédiaires de l'accumulation supplémentaires,
- l'accumulation présente en outre une troisième étape d'accumulation, qui calcule et émet, en tant que résultats intermédiaires de correction, des valeurs de termes de correction dans le corps de Galois GF(p), les termes de correction corrigeant des erreurs d'accumulation de la première ou deuxième étape de l'accumulation dans le corps de Galois GF(p) que l'exécution itérative de l'accumulation selon la première ou la deuxième partie de l'instruction d'accumulation introduit, et
- la première étape de calcul de produits du calcul de produits calcule et émet en outre le produit C à réduire dans le corps de Galois GF(p) en utilisant tous les résultats intermédiaires de l'accumulation.

11. Procédé selon l'une des revendications 9 ou 10, dans lequel une suite de bits émise à la première ou à la deuxième étape du calcul de produits est réduite en une suite de bits plus courte qui est équivalente à la suite de bits émise dans le corps de Galois GF(p) ou $GF(2^n)$ concerné.

12. Procédé selon l'une des revendications 9 à 11, dans lequel en fonction d'un signal de sélection appliqué du côté de l'entrée, soit le calcul et l'émission du produit C en tant que produit dans le corps de Galois GF(p), soit le calcul et l'émission du produit C en tant que produit dans le corps de Galois $GF(2^n)$ sont exécutés.

**13.** Procédé cryptographique destiné à l'utilisation dans un dispositif cryptographique électronique comprenant un procédé selon l'une des revendications 9 à 12.

$A \cdot B =$

$$\times \quad \begin{array}{cccc} 1 & 1 & 0 & 1 \\ 1 & 0 & 1 & 1 \end{array}$$

$$\begin{array}{ccccccc} & & 1 & 1 & 0 & 1 & cs_0=1 \\ & 1 & 1 & 0 & 1 & cs_1=1 \\ & 0 & 0 & 0 & 0 & cs_2=1 \\ 1 & 1 & 0 & 1 \end{array}$$

$cs_6=1 \quad cs_5=1 \quad cs_4=1 \quad cs_3=11_2$

$$\begin{array}{cccccccc} 1 & 0 & 0 & 0 & 1 & 1 & 1 & 1 \\ c_7 & c_6 & c_5 & c_4 & c_3 & c_2 & c_1 & c_0 \end{array}$$

## Fig. 1    - Stand der Technik -

$A \cdot B =$

$$\times \quad \begin{array}{cccc} a_3 & a_2 & a_1 & a_0 \\ b_3 & b_2 & b_1 & b_0 \end{array}$$

$$\begin{array}{ccccccc} & & + & a_3b_0 & a_2b_0 & a_1b_0 & a_0b_0 \\ & + & a_3b_1 & a_2b_1 & a_1b_1 & a_0b_1 \\ + & a_3b_2 & a_2b_2 & a_1b_2 & a_0b_2 \\ a_3b_3 & a_2b_3 & a_1b_3 & a_0b_3 \end{array}$$

$$\begin{array}{ccccccc} c_6 & c_5 & c_4 & c_3 & c_2 & c_1 & c_0 \end{array}$$

## Fig. 2    - Stand der Technik -

| | | | | | | | | |
|---|---|---|---|---|---|---|---|---|
| a0b0 | | | | | | | + | $cs_0$ |
| a0b1 | | | | | | | + | |
| a1b0 | | | | | | | + | |
| a0b2 | | | | | | + | | $cs_1$ |
| a1b1 | | | | | | + | | |
| a2b0 | | | | | | + | | $cs_2$ |
| a0b3 | | | | | | + | | |
| a1b2 | | | | | | + | | |
| a2b1 | | | | | | + | | |
| a3b0 | | | | | | + | $cs_3$ | |
| a1b3 | | | | | + | | | |
| a2b2 | | | | | + | | | |
| a3b1 | | | | | + | $cs_4$ | | |
| a2b3 | | | | + | | | | |
| a3b2 | | | | + | $cs_5$ | | | |
| a3b3 | | | + | $cs_6$ | | | | |
| | $c_6$ | $c_5$ | $c_4$ | $c_3$ | $c_2$ | $c_1$ | $c_0$ | |

## Fig. 3    - Stand der Technik -

Fig. 4        - Stand der Technik -

Fig. 5        - Stand der Technik -

$A \cdot B =$

Fig. 6

| | $c_7$ | $c_6$ | $c_5$ | $c_4$ | $c_3$ | $c_2$ | $c_1$ | $c_0$ |
|---|---|---|---|---|---|---|---|---|
| $a_0 \cdot b_0 = p_1$ | | | | | + | - | - | + |
| $a_1 \cdot b_1 = p_2$ | | | | - | + | + | - | |
| $a_2 \cdot b_2 = p_3$ | | | - | + | + | - | | |
| $a_3 \cdot b_3 = p_4$ | | + | - | - | + | | | |
| $(a_0 + a_2) \cdot (b_0 + b_2) = p_5$ | | | | | - | + | | |
| $(a_1 + a_3) \cdot (b_1 + b_3) = p_6$ | | | | + | - | | | |
| $(a_0 + a_1) \cdot (b_0 + b_1) = p_7$ | | | | | - | | + | |
| $(a_2 + a_3) \cdot (b_2 + b_3) = p_8$ | | | + | | - | | | |
| $(a_0 + a_1 + a_2 + a_3) \cdot (b_0 + b_1 + b_2 + b_3) = p_9$ | | | | | + | | | |
| | $c_7$ | $c_6$ | $c_5$ | $c_4$ | $c_3$ | $c_2$ | $c_1$ | $c_0$ |

Fig. 7

| | | $c_7$ | $c_6$ | $c_5$ | $c_4$ | $c_3$ | $c_2$ | $c_1$ | $c_0$ |
|---|---|---|---|---|---|---|---|---|---|
| Akkumulations- Stufe 1 $S^I + S^{II} + D^I = S^{II} = S$ | $a_0 \cdot b_0 = p_1$ | | | | | + | | | + |
| | $a_1 \cdot b_1 = p_2$ | | | | | + | + | | |
| | $a_2 \cdot b_2 = p_3$ | | | | + | + | | | |
| | $a_3 \cdot b_3 = p_4$ | | | + | | + | | | |
| | $(a_0 + a_2) \cdot (b_0 + b_2) = p_5$ | | | | | | + | | |
| | $(a_1 + a_3) \cdot (b_1 + b_3) = p_6$ | | | | + | | | | |
| | $(a_0 + a_1) \cdot (b_0 + b_1) = p_7$ | | | | | | | + | |
| | $(a_2 + a_3) \cdot (b_2 + b_3) = p_8$ | | | + | | | | | |
| | $(a_0 + a_1 + a_2 + a_3) \cdot (b_0 + b_1 + b_2 + b_3) = p_9$ | | | | | + | | | |
| Akkumulations- Stufe 2 $D^{II} = D$ | $a_0 \cdot b_0 = p_1$ | | | | | | - | - | |
| | $a_1 \cdot b_1 = p_2$ | | | | - | | | - | |
| | $a_2 \cdot b_2 = p_3$ | | | - | | | - | | |
| | $a_3 \cdot b_3 = p_4$ | | | - | - | | | | |
| | $(a_0 + a_2) \cdot (b_0 + b_2) = p_5$ | | | | | - | | | |
| | $(a_1 + a_3) \cdot (b_1 + b_3) = p_6$ | | | | | - | | | |
| | $(a_0 + a_1) \cdot (b_0 + b_1) = p_7$ | | | | | - | | | |
| | $(a_2 + a_3) \cdot (b_2 + b_3) = p_8$ | | | | | - | | | |
| | | $c_7$ | $c_6$ | $c_5$ | $c_4$ | $c_3$ | $c_2$ | $c_1$ | $c_0$ |

Fig. 8

Akkumulations-Stufe 1 — $S^I + S^{II} + D^I = S^I + D^I = S + D^I$

| | $c_7$ | $c_6$ | $c_5$ | $c_4$ | $c_3$ | $c_2$ | $c_1$ | $c_0$ |
|---|---|---|---|---|---|---|---|---|
| $a_0{\cdot}b_0=p_1$ | | | | | + | + | + | + |
| $a_1{\cdot}b_1=p_2$ | | | | + | + | + | + | |
| $a_2{\cdot}b_2=p_3$ | | | + | + | + | + | | |
| $a_3{\cdot}b_3=p_4$ | | + | + | + | + | | | |
| $(a_0{+}a_2){\cdot}(b_0{+}b_2)=p_5$ | | | | | + | + | | |
| $(a_1{+}a_3){\cdot}(b_1{+}b_3)=p_6$ | | | | + | + | | | |
| $(a_0{+}a_1){\cdot}(b_0{+}b_1)=p_7$ | | | | | + | | + | |
| $(a_2{+}a_3){\cdot}(b_2{+}b_3)=p_8$ | | | + | | + | | | |
| $(a_0{+}a_1{+}a_2{+}a_3){\cdot}(b_0{+}b_1{+}b_2{+}b_3)=p_9$ | | | | | + | | | |

→ kann iterativ berechnet werden

Akkumulations-Stufe 3 — $2{\cdot}D^I = 2{\cdot}D$

| | $c_7$ | $c_6$ | $c_5$ | $c_4$ | $c_3$ | $c_2$ | $c_1$ | $c_0$ |
|---|---|---|---|---|---|---|---|---|
| $a_0{\cdot}b_0=p_1$ | | | | | | − | − | |
| $a_1{\cdot}b_1=p_2$ | | | | | | − | | − |
| $a_2{\cdot}b_2=p_3$ | | | | | − | | − | |
| $a_3{\cdot}b_3=p_4$ | | | | | − | − | | |
| $(a_0{+}a_2){\cdot}(b_0{+}b_2)=p_5$ | | | | | − | | | |
| $(a_1{+}a_3){\cdot}(b_1{+}b_3)=p_6$ | | | | | − | | | |
| $(a_0{+}a_1){\cdot}(b_0{+}b_1)=p_7$ | | | | | − | | | |
| $(a_2{+}a_3){\cdot}(b_2{+}b_3)=p_8$ | | | | | − | | | |
| $a_0{\cdot}b_0=p_1$ | | | | | | − | − | |
| $a_1{\cdot}b_1=p_2$ | | | | | | − | | − |
| $a_2{\cdot}b_2=p_3$ | | | | | − | | − | |
| $a_3{\cdot}b_3=p_4$ | | | | | − | − | | |
| $(a_0{+}a_2){\cdot}(b_0{+}b_2)=p_5$ | | | | | − | | | |
| $(a_1{+}a_3){\cdot}(b_1{+}b_3)=p_6$ | | | | | − | | | |
| $(a_0{+}a_1){\cdot}(b_0{+}b_1)=p_7$ | | | | | − | | | |
| $(a_2{+}a_3){\cdot}(b_2{+}b_3)=p_8$ | | | | | − | | | |

**Fig. 9**

| | $c_6$ | $c_5$ | $c_4$ | $c_3$ | $c_2$ | $c_1$ | $c_0$ |
|---|---|---|---|---|---|---|---|
| $a_0{\cdot}b_0=p_1$ | | | | $\oplus$ | $\oplus$ | $\oplus$ | $\oplus$ |
| $a_1{\cdot}b_1=p_2$ | | | $\oplus$ | $\oplus$ | $\oplus$ | $\oplus$ | |
| $a_2{\cdot}b_2=p_3$ | | $\oplus$ | $\oplus$ | $\oplus$ | $\oplus$ | | |
| $a_3{\cdot}b_3=p_4$ | $\oplus$ | $\oplus$ | $\oplus$ | $\oplus$ | | | |
| $(a_0{\oplus}a_2){\cdot}(b_0{\oplus}b_2)=p_5$ | | | | $\oplus$ | $\oplus$ | | |
| $(a_1{\oplus}a_3){\cdot}(b_1{\oplus}b_3)=p_6$ | | | $\oplus$ | $\oplus$ | | | |
| $(a_0{\oplus}a_1){\cdot}(b_0{\oplus}b_1)=p_7$ | | | | $\oplus$ | | $\oplus$ | |
| $(a_2{\oplus}a_3){\cdot}(b_2{\oplus}b_3)=p_8$ | | $\oplus$ | | $\oplus$ | | | |
| $(a_0{\oplus}a_1{\oplus}a_2{\oplus}a_3){\cdot}(b_0{\oplus}b_1{\oplus}b_2{\oplus}b_3)=p_9$ | | | | $\oplus$ | | | |

**Fig. 10**

**Akkumulations-Stufe 1**   $S^I + S^{II} + D^I = S + D^I$

| | c7 | c6 | c5 | c4 | c3 | c2 | c1 | c0 |
|---|---|---|---|---|---|---|---|---|
| p1 | | | | | + | + | + | + |
| p2 | | | | + | + | + | + | |
| p3 | | | + | + | + | + | | |
| p4 | | + | + | + | + | | | |
| p5 | | | | | | + | | |
| p6 | | | | + | | | | |
| p7 | | | | | | | + | |
| p8 | | | + | | | | | |
| p9 | | | | | + | | | |

**Akkumulations-Stufe 2**   $-D^{II}$

| | c7 | c6 | c5 | c4 | c3 | c2 | c1 | c0 |
|---|---|---|---|---|---|---|---|---|
| p5 | | | | | - | | | |
| p6 | | | | | - | | | |
| p7 | | | | | - | | | |
| p8 | | | | | - | | | |

**Akkumulations-Stufe 3**   $-2 \cdot D^I$

| | c7 | c6 | c5 | c4 | c3 | c2 | c1 | c0 |
|---|---|---|---|---|---|---|---|---|
| p1 | | | | | | - | - | |
| p2 | | | | - | | | - | |
| p3 | | | - | | | - | | |
| p4 | | | - | - | | | | |
| p1 | | | | | | - | - | |
| p2 | | | | - | | | - | |
| p3 | | | - | | | - | | |
| p4 | | | - | - | | | | |

**Fig. 11**

**Akkumulations-Stufe 2**   $-(D^I + S^I) = -(D+S)$

| | c7 | c6 | c5 | c4 | c3 | c2 | c1 | c0 |
|---|---|---|---|---|---|---|---|---|
| $a_0 \cdot b_0 = p_1$ | | | | | - | - | - | - |
| $a_1 \cdot b_1 = p_2$ | | | | - | - | - | - | |
| $a_2 \cdot b_2 = p_3$ | | | - | - | - | - | | |
| $a_3 \cdot b_3 = p_4$ | | - | - | - | - | | | |
| $(a_0 + a_2) \cdot (b_0 + b_2) = p_5$ | | | | | - | - | | |
| $(a_1 + a_3) \cdot (b_1 + b_3) = p_6$ | | | | - | - | | | |
| $(a_0 + a_1) \cdot (b_0 + b_1) = p_7$ | | | | | - | | - | |
| $(a_2 + a_3) \cdot (b_2 + b_3) = p_8$ | | | - | | - | | | |
| $(a_0 + a_1 + a_2 + a_3) \cdot (b_0 + b_1 + b_2 + b_3) = p_9$ | | | | | - | | | |

**Akkumulations-Stufe 3**   $2 \cdot S^I = 2 \cdot S$

| | c7 | c6 | c5 | c4 | c3 | c2 | c1 | c0 |
|---|---|---|---|---|---|---|---|---|
| $a_0 \cdot b_0 = p_1$ | | | | | + | | | + |
| $a_1 \cdot b_1 = p_2$ | | | | | + | + | | |
| $a_2 \cdot b_2 = p_3$ | | | | + | + | | | |
| $a_3 \cdot b_3 = p_4$ | | | + | | + | | | |
| $(a_0 + a_2) \cdot (b_0 + b_2) = p_5$ | | | | | | + | | |
| $(a_1 + a_3) \cdot (b_1 + b_3) = p_6$ | | | | + | | | | |
| $(a_0 + a_1) \cdot (b_0 + b_1) = p_7$ | | | | | | | + | |
| $(a_2 + a_3) \cdot (b_2 + b_3) = p_8$ | | | + | | | | | |
| $(a_0 + a_1 + a_2 + a_3) \cdot (b_0 + b_1 + b_2 + b_3) = p_9$ | | | | | + | | | |
| $a_0 \cdot b_0 = p_1$ | | | | | + | | | + |
| $a_1 \cdot b_1 = p_2$ | | | | | + | + | | |
| $a_2 \cdot b_2 = p_3$ | | | | + | + | | | |
| $a_3 \cdot b_3 = p_4$ | | | + | | + | | | |
| $(a_0 + a_2) \cdot (b_0 + b_2) = p_5$ | | | | | | + | | |
| $(a_1 + a_3) \cdot (b_1 + b_3) = p_6$ | | | | + | | | | |
| $(a_0 + a_1) \cdot (b_0 + b_1) = p_7$ | | | | | | | + | |
| $(a_2 + a_3) \cdot (b_2 + b_3) = p_8$ | | | + | | | | | |
| $(a_0 + a_1 + a_2 + a_3) \cdot (b_0 + b_1 + b_2 + b_3) = p_9$ | | | | | + | | | |

**Fig. 12**

Fig. 13

Fig. 14

34

**IN DER BESCHREIBUNG AUFGEFÜHRTE DOKUMENTE**

**In der Beschreibung aufgeführte Patentdokumente**

- DE 102006013989